(19) Europäisches Patentamt
European Patent Office
Office européen des brevets

(11) **EP 4 787 362 A1**

(12) **EUROPEAN PATENT APPLICATION**
published in accordance with Art. 153(4) EPC

(43) Date of publication:
**05.08.2026 Bulletin 2026/32**

(21) Application number: **25783159.4**

(22) Date of filing: **03.04.2025**

(51) International Patent Classification (IPC):
***G09G 5/02*** *(2006.01)* ***G09G 3/3208*** *(2016.01)*
***G06T 7/12*** *(2017.01)* ***G09G 3/00*** *(2006.01)*

(52) Cooperative Patent Classification (CPC):
**G06T 11/10; G06T 5/73; G06T 7/12; G09G 3/00; G09G 3/3208; G09G 5/02;** G06T 2207/10024; G06T 2207/20192

(86) International application number:
**PCT/KR2025/004450**

(87) International publication number:
**WO 2025/211800 (09.10.2025 Gazette 2025/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.04.2024 KR 20240045378**

(71) Applicant: **Samsung Electronics Co., Ltd.**
**Suwon-si, Gyeonggi-do 16677 (KR)**

(72) Inventor: **PARK, Jaesung**
**Suwon-si Gyeonggi-do 16677 (KR)**

(74) Representative: **Appleyard Lees IP LLP**
**G Mill**
**Dean Clough Industrial Park**
**Halifax HX3 5AH (GB)**

(54) **SYSTEM AND METHOD FOR ENHANCING DISPLAY CONTOUR EMPHASIS FOR LOW-VISION PERSON**

(57) Provided is an electronic apparatus and method of operating same, the electronic apparatus including: a display including a spontaneous emission element; memory storing instructions; and a processor configured to execute the instructions and cause the electronic apparatus to: based on a visual assistance mode being activated, identify an edge area of an input image; identify an edge enhancement area of the input image and expand the edge area in the edge enhancement area to a preset thickness; in the edge enhancement area, process the input image such that a first area corresponding to one direction relative to the edge area includes a first color and a second area corresponding to an opposite direction includes a second color; and display the processed input image, wherein the first color includes a preset color, and the second color includes a blend of a color corresponding to the edge area and the preset color.

FIG. 3

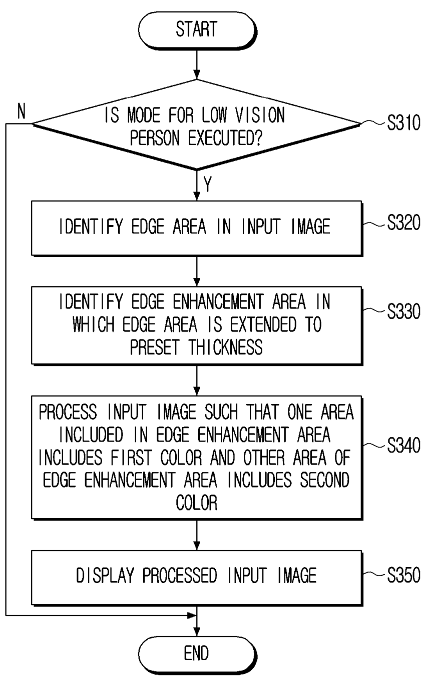


EP 4 787 362 A1

## Description

[TECHNICAL FIELD]

The present disclosure relates to an electronic apparatus and a method of controlling same; and more particularly, to an electronic apparatus providing a view mode for assisting a person with impaired vision and a control method thereof.

[BACKGROUND ART]

Thanks to the development of electronic technologies, various types of electronic apparatuses have been developed and distributed. In particular, a display device such as a TV or a laptop have been developed in various forms.
In general, a display device such as a TV provides a mode for a low vision person (or a relumino mode) for assisting a visually impaired person with low vision.
According to an example of the mode for assisting a person with impaired vision, an edge area may be enhanced with a specific color. A function for edge enhancement may highlight a boundary area of an image to assist the low vision person to better discern the shape and movement of an object. However, in this case, excessive stresses are applied to part of pixels, and thus there is an increased possibility of a Burn-In phenomenon.

[DISCLOSURE]

[TECHNICAL SOLUTION]

According to an aspect of the disclosure, an electronic apparatus includes: a display including a spontaneous emission element; memory storing one or more instructions; and one or more processors configured to execute the one or more instructions, wherein the one or more instructions, when executed by the one or more processors, cause the electronic apparatus to: based on a mode for assisting a person with impaired vision being activated, identify an edge area of an input image; identify an edge enhancement area of the input image and expand the edge area in the edge enhancement area to a preset thickness; in the edge enhancement area, process the input image such that a first area corresponding to one direction relative to the edge area includes a first color and a second area corresponding to a direction opposite to the one direction includes a second color; and provide the processed input image through the display, wherein the first color includes a preset color, and wherein the second color includes a blend of a color corresponding to the edge area and the preset color.
According to an aspect of the disclosure, a method of controlling an electronic apparatus includes: based on a mode of assisting a person with impaired vision being activated, identifying an edge area in an input image; identifying an edge enhancement area of the input image and expanding the edge area in the edge enhancement area to a preset thickness; in the edge enhancement area, processing the input image such that a first area corresponding to one direction relative to the edge area includes a first color and a second area corresponding to a direction opposite to the one direction includes a second color; and displaying the processed input image, wherein the first color includes a preset color, and wherein the second color includes a blend of a color corresponding to the edge area and the preset color.
According to an aspect of the disclosure, a non-transitory computer readable medium has instructions stored therein, which when executed by at least one processor of an electronic apparatus, cause the electronic apparatus to execute a method of operating the electronic apparatus, wherein the method includes: based on a mode of assisting a person with impaired vision being activated, identifying an edge area in an input image; identifying an edge enhancement area of the input image and expanding the edge area in the edge enhancement area to a preset thickness; in the edge enhancement area, processing the input image such that a first area corresponding to one direction relative to the edge area includes a first color and a second area corresponding to a direction opposite to the one direction includes a second color; and displaying the processed input image, wherein the first color includes a preset color, and wherein the second color includes a blend of a color corresponding to the edge area and the preset color.

[BRIEF DESCRIPTION OF DRAWINGS]

The above and other aspects and features of certain embodiments of the present disclosure will be more apparent from the following description taken in conjunction with the accompanying drawings, in which:

FIGS. 1a to 1f are views illustrating a mode for a low vision person according to one or more embodiments;
FIG. 2a is a block diagram illustrating a configuration of an electronic apparatus according to one or more embodiments;

FIG. 2b is a block diagram specifically illustrating a configuration of an electronic apparatus according to one or more embodiments;

FIG. 3 is a flow chart illustrating a method of controlling an electronic apparatus according to one or more embodiments;

FIG. 4 is a flow chart illustrating a method of controlling an electronic apparatus according to one or more embodiments;

FIG. 5 is a view illustrating a method of detecting an edge according to one or more embodiments;

FIGS. 6a to 6c are views illustrating a method of expanding an edge area according to one or more embodiments;

FIG. 7 is a view illustrating a method of processing an edge enhancement area according to one or more embodiments;

FIG. 8 is a view illustrating a method of obtaining local contrast information according to one or more embodiments;

FIGS. 9a and 9b are views illustrating a method of obtaining local contrast information of an edge enhancement area according to one or more embodiments;

FIGS. 10a and 10b are views illustrating a method of enhancing an edge according to one or more embodiments;

FIG. 11 is a flow chart illustrating a method of controlling an electronic apparatus according to one or more embodiments;

FIGS. 12a and 12b are views illustrating a method of enhancing an edge in accordance with a thickness of the edge according to one or more embodiments;

FIG. 13 is a view illustrating a method of identifying a color of an edge enhancement area according to one or more embodiments; and

FIG. 14 is a view illustrating a method of identifying a color of an edge enhancement area according to one or more embodiments.

[DETAILED DESCRIPTION OF EXEMPLARY EMBODIMENTS]

The terms used in embodiments of the disclosure are selected as general terms in consideration of functions in the disclosure but may be varied depending on intention of those skilled in the art, a particular application, appearance of new technologies, or the like. Also, where a term is arbitrarily selected by the applicant, its meaning is specifically described in the relevant part of the disclosure. Therefore, the terms used in the disclosure should be defined based on the meaning of the term and the entire content throughout the disclosure rather than simply the name of the term.

In the specification, the expression such as "have", "may have", "include", or "may include" denotes the existence of such a characteristic (e.g. a numerical value, a function, an operation, or a component such as a part) and does not exclude the existence of additional characteristics.

In the disclosure, the expression "A or B", "at least one of A and/or B", "one or more of A and/or B", or the like may include all possible combinations of the listed items. For example, "A or B", "at least one of A and B", or "at least one of A or B" may refer to all of the following cases: (1) including only A, (2) including only B, or (3) including all of A and B.

The expression "1st", "2nd", "first", "second", or the like used in the specification may be used to describe various elements regardless of any order and/or degree of importance, wherein such expression is used only to distinguish one element from another element and is not intended to limit the relevant element.

The description that one element (e.g. a first element) is "(operatively or communicatively) coupled with/to" or "connected to" another element (e.g. a second element) should be interpreted to include both of the case where the one element is directly coupled to the another element, and the case where the one element is coupled to the another element through the other element (e.g. a third element).

The expression "configured to (or set to)" used in the disclosure may be interchangeably used with other expressions, for example, "suitable for", "having the capacity to", "designed to", "adapted to", "made to", or "capable of" depending on circumstances. The term "configured to (or set to)" may not necessarily mean "specifically designed to" in terms of hardware.

Under some circumstances, the expression "a device configured to" may mean that the device "is capable of" performing an operation together with another device or component. For example, the phrase "a processor configured to (set to) perform A, B, and C" may mean a dedicated processor for performing the corresponding operations (e.g. an embedded processor), or a generic-purpose processor that may perform the corresponding operations by executing one or more software programs stored in a memory device (e.g. a CPU or an application processor).

A singular expression includes a plural expression, unless obviously differently defined in the context. In the application, the term such as "include" or "consist of" should be construed as designating that there are such characteristics, numbers, steps, operations, components, parts, or a combination thereof described in the specification but not as excluding in advance possibility of the existence or addition of one or more other characteristics, numbers, steps, operations, components, parts, or a combination thereof.

In embodiments, a "module" or "part" may perform at least one function or operation and may be implemented as hardware or software, or as a combination of hardware and software. Also, a plurality of "modules" or "parts" may be integrated into at least one module and implemented as at least one processor, excluding a "module" or "part" that needs to be implemented as specific hardware.

Various elements and areas in the drawings are illustrated schematically. Accordingly, the technical idea of the disclosure is not limited by the relative sizes or intervals illustrated in the appended drawings.

Hereinafter, an embodiment of the disclosure is more specifically described with reference to the appended drawings.

FIGS. 1a to 1f are views illustrating a mode for assisting a person with impaired vision according to one or more embodiments.

According to an embodiment, the electronic apparatus 100 may provide a mode for a person with impaired vision (or a relumino mode).

The mode for assisting the person with impaired vision may be a special function designed for users who may not enjoy viewing due to difficulties in discerning an image on a display. The mode for assisting the person with impaired vision may provide various assistance functions such as edge enhancement, adjustment of a text size and a font, adjustment of brightness and contrast, color adjustment, audio guidance, and an explanation. The mode for assisting the person with impaired vision may include a user definition function which may store and manage a setting preferred by a user in general. In general, the person with impaired vision tends to prefer to an image in which a detailed expression is omitted inside an object and an edge of the object is more clearly enhanced. Accordingly, the electronic apparatus 100 may perform edge enhancement processing 10 for enhancing an edge of an object included in an input image as shown in FIG. 1a.

According to an embodiment, as shown in FIG. 1b, a black edge 20, a green edge 30, and a yellow edge 40 may be used for edge enhancement in the electronic apparatus 100. In general, the person with impaired vision has high sensitivity to a green color or a yellow color in a state where an ability to recognize a contrast ratio is lowered, and thus any one of black, green, or yellow may be used as an edge enhancement color.

According to an embodiment, as shown in FIG. 1c, if a 3 pixel edge 51 of the input image is enhanced with a 7 pixel black edge 61, a gray code value of a pixel corresponding to an edge expanded as shown in a lower side may be changed from a value shown in a right graph 52 to a value 0 as shown in a left graph 62.

According to an embodiment, as shown in FIG. 1d, if the black edge 20 is used for edge enhancement, a stress of a pixel around an edge may be reduced by turning off the pixel around the edge in which burn-in is strongly seen (e.g. CV = 0).

As used herein, the term "burn-in phenomenon" means a phenomenon where, after a specific image, an icon, or the like is displayed for a long time on a screen, it remains in a form of a shadow on the screen temporarily or permanently even when the image on the screen changes. The burn-in phenomenon may mainly occur due to deterioration of the pixel (e.g. an organic light emitting material is more consumed) as the same screen element is displayed for a long time.

According to an embodiment, as shown in FIG. 1d, if the green edge 30 is used for edge enhancement, only the green pixel is driven (e.g. CV = 255) and used, and thus there is a problem that only deterioration of the green pixel may occur.

According to an embodiment, as shown in FIG. 1d, if the yellow edge 40 is used for edge enhancement, only red and green pixels are driven (e.g. CV = 255) and used, and thus the red pixel and the green pixel are deteriorated and only a stress of the blue pixel may be reduced.

According to an embodiment, as shown in FIG. 1e, if the black edge 20 is used for edge enhancement, the red pixel, the green pixel, and the blue pixel are not driven in the edge area, and thus there is no pixel deterioration in the edge area. Accordingly, a color deviation (or color distortion) does not occur in the edge as shown in FIG. 1f.

According to an embodiment, if green is used for edge enhancement as shown in FIG. 1E, only a green pixel is deteriorated in the edge area. Accordingly, a color deviation occurs in the edge as shown in FIG. 1f.

According to an embodiment, if the yellow edge 40 is used for edge enhancement as shown in FIG. 1e, only a red pixel and a green pixel are deteriorated in the edge area. Accordingly, a color deviation occurs in the edge as shown in FIG. 1f.

Accordingly, one or more embodiments are described to reduce a burn-in risk which may occur when a mode for a person with impaired vision is provided in a display including a spontaneous emission element.

FIG. 2a is a block diagram illustrating a configuration of an electronic apparatus according to an embodiment.

According to FIG. 2a, the electronic apparatus 100 may include memory 110, a display 120, and one or more processors 130.

The electronic apparatus 100 may be implemented as various types of display devices such as a TV, a monitor, a PC, kiosk, a tablet PC, an electronic picture frame, a mobile phone, a Head Mounted Display (HMD), a Near Eye Display (NED), a Large Format Display (LFD), Digital Signage, a Digital Information Display (DID), a video wall, a projector display, or an image processing device (e.g. a set-top box, one connected box) which provides an image with the display devices.

The memory 110 may store data required for one or more embodiments. The memory 110 may be implemented as memory embedded in the electronic apparatus 100 according to a use for data storage or may be implemented as memory detachable from the electronic apparatus 100. For example, data for driving the electronic apparatus 100 is stored in memory embedded in the electronic apparatus 100' and data for an extension function of the electronic apparatus 100 may be stored in memory detachable from the electronic apparatus 100. Memory embedded in the electronic apparatus 100 may be implemented as at least one of volatile memory (e.g. dynamic RAM (DRAM), static RAM (SRAM), or synchronous dynamic RAM (SDRAM, etc.)) or non-volatile memory (e.g. one time programmable ROM (OTPROM), programmable ROM (PROM), erasable and programmable ROM (EPROM), electrically erasable and programmable ROM (EEPROM), mask ROM, flash ROM, flash memory (e.g. NAND flash memory, NOR flash memory, etc.), a hard drive, or a solid state drive (SSD)). Also, memory detachable from the electronic apparatus 100' may be implemented as a memory card (e.g. a Compact Flash (CF) card, a Secure Digital (SD) card, a Micro Secure Digital (Micro-SD) card, a Mini Secure Digital (Mini-SD) card, an extreme Digital (xD) card, a MultiMedia Card (MMC), etc.), external memory connectable to a USB port (e.g. USB memory), etc.

According to an embodiment, the memory 110 may store a computer program including at least one instruction or instructions for controlling the electronic apparatus 100.

According to an embodiment, the memory 110 may store an image received from an external device (e.g. a source device), an external storing medium (e.g. a USB), an external server (e.g. webhard), or the like, that is, an input image. Otherwise, the memory 110 may store an image obtained through a camera included in the electronic apparatus 100. Here, the image may be a 2D moving image but is not limited thereto.

According to one or more embodiments, the memory 110 may store various information required for image quality processing including, for example, information, an algorithm, and an image quality parameter for performing at least one of noise reduction, detail enhancement, tone mapping, contrast enhancement, color enhancement, or frame rate conversion. Also, the memory 110 may store an intermediate image generated by image processing or an image generated based on depth information.

According to one or more embodiments, the memory 110 may be implemented as a single memory storing data generated from various operations according to the disclosure. According to one or more embodiments, the memory 110 may be implemented to include a plurality of memories storing each different type of data or storing each data generated in different operations.

In the aforementioned embodiment, it is described that various data is stored in the external memory 110 of the processor 130, but at least part of the data may be stored in internal memory of the one or more processors 130 according to at least one embodiment.

The display 120 may be implemented as a display including a spontaneous emission element. For example, the display 120 may be implemented as various types of displays such as an Organic Light Emitting Diode (OLED) display, a Light Emitting Diode (LED), a micro LED, a mini LED, a Plasma Display Panel (PDP), a Quantum Dot (QD) display, and a Quantum Dot Light-Emitting Diode (QLED). The display 120 may include a driving circuit which may be implemented in a form such as an a-si TFT, a low temperature poly silicon (LTPS) TFT, or an organic TFT (OTFT), a backlight unit, or the like together. According to an embodiment, a touch sensor which has a shape of a touch film, a touch sheet, a touch pad, or the like and senses a touch operation may be disposed on the front surface of the display 120 and may be implemented to sense various types of touch inputs. For example, the display 120 may detect various types of touch inputs such as a touch input by a user hand, a touch input by an input device such as a stylus pen, or a touch input by a specific electrostatic material. Here, the input device may be implemented as an input device having a pen shape which may be referred to as various terms such as an electronic pen, a stylus pen, or a S-pen. According to an embodiment, the display 120 may be implemented as a flat display, a curved display, a folding and/or rollable flexible display, etc.

According to an embodiment, if the display 120 is implemented as an OLED display, it may be implemented as a RGB OLED or a WRGB OLED. The RGB OLED has advantages that each pixel has an independent organic light emitting diode, expresses all of three colors (i.e., red, green, and blue), and thus may have high color reproducibility and express a deep black color thanks to this structure. On the contrary, in the WRGB OLED, each pixel is configured of four sub pixels, wherein one of these pixels may be configured as an organic light emitting diode which emits white light. The WRGB OLED has an advantage that it may have more choices for controlling brightness and may increase brightness of the screen but has a disadvantage that color reproducibility may be relatively lowered. A problem of burn-in mainly occurs in case that the same image or scene is continuously displayed on the OLED display for a long time, wherein it may occur because each pixel is continuously activated. In this case, there may be a difference in burn-in speeds between the RGB OLED and the WRGB OLED, wherein this difference is because of a difference in pixel structure. For example, compared to the RGB OLED, the WRGB OLED has relatively low possibility that burn-in occurs because brightness is adjusted by using the white sub pixel.

The one or more processors 130 control operations of the electronic apparatus 100 overall. Specifically, the one or more processors 130 may be connected to each component of the electronic apparatus 100 to control operations of the electronic apparatus 100 overall. For example, the one or more processors 130 may be operatively connected to the memory 110 to control the operations of the electronic apparatus 100 overall. The one or more processors 130 may be configured of one processor or a plurality of processors.

The one or more processors 130 may perform operations of the electronic apparatus 100 according to various embodiments by executing at least one instruction stored in the memory 110.

The one or more processors 130 may include one or more of a Central Processing Unit (CPU), a Graphics Processing Unit (GPU), an Accelerated Processing Unit (APU), a Many Integrated Core (MIC), a Digital Signal Processor (DSP), a Neural Processing Unit (NPU), a hardware accelerator, or a machine learning accelerator. The one or more processors 130 may control one or any combination of other components of the electronic apparatus and perform an operation related to communication or data processing. The one or more processors 130 may execute one or more programs or instructions stored in the memory. For example, the one or more processors may perform a method according to one or more embodiments of the disclosure by executing one or more instructions stored in the memory.

If a method according to one or more embodiments of the disclosure includes a plurality of operations, the plurality of operations may be performed by one processor and may be performed by a plurality of processors. For example, when a first operation, a second operation, and a third operation are performed by a method according to one or more embodiments, all of the first operation, the second operation, and the third operation may be performed by a first processor. Alternatively, the first operation and the second operation may be performed by the first processor (e.g. a general purpose processor) and the third operation may be performed by a second processor (e.g. an Artificial Intelligence (AI)-dedicated processor).

The one or more processors 130 may be implemented as a single core processor including one core and may be implemented as one or more multi core processors including a plurality of cores (e.g. homogeneous multicores or heterogeneous multicores). If the one or more processors 130 are implemented as a multi core processor, each of the plurality of cores included in the multi core processor may include processor internal memory such as cache memory and on-chip memory, wherein a common cache shared by the plurality of cores may be included in the multi core processor. Also, each of the plurality of cores included in the multi core processor (or part of the plurality of cores) may read and perform program instructions for independently implementing a method according to one or more embodiments of the disclosure and also, may read and perform program instructions for implementing a method according to one or more embodiments of the disclosure in connection with all (or part) of the plurality of cores.

If a method according to one or more embodiments of the disclosure includes a plurality of operations, the plurality of operations may be performed by one core among the plurality of cores included in the multi core processor or may be performed by the plurality of cores. For example, when a first operation, a second operation, and a third operation are performed by a method according to one or more embodiments, all of the first operation, the second operation, and the third operation may be performed by a first core included in the multi core processor. Alternatively, the first operation and the second operation may be performed by the first core included in the multi core processor and the third operation may be performed by the second core included in the multi core processor.

In one or more embodiments of the disclosure, a processor may mean a System on Chip (SoC) onto which one or more processors and other electronic components are integrated, a single core processor, a multi core processor, or a core included in the single core processor or the multi core processor, wherein the core may be implemented as a CPU, a GPU, an APU, a MIC, a DSP, a NPU, a hardware accelerator, a machine learning accelerator, or the like, but embodiments of the disclosure are not limited thereto. Hereinafter, for convenience of the description, the one or processors 130 are referred to as a processor 130.

According to an embodiment, the electronic apparatus 100 may receive various compressed images or images of various resolutions. For example, the electronic apparatus 100 may receive an image in a compressed form such as Moving Picture Experts Group (MPEG) (e.g. MP2, MP4, MP7, etc.), Joint Photographic Experts Group (JPEG), Advanced Video Coding (AVC), H.264, H.265, or High Efficiency Video Codec (HEVC). Otherwise, the electronic apparatus 100 may receive any one image of Standard Definition (SD), High Definition (HD), Full HD, or Ultra HD images.

According to an embodiment, the processor 130, after performing image processing on an input image, may obtain depth information based on the image-processed image. Here, the image processing may be digital image processing including at least one of image enhancement, image restoration, image transformation, image analysis, image understanding, image compression, image decoding or scaling.

According to an embodiment, various preprocessing operations may be performed on the input image, but the input image and the preprocessed image are not differentiated from each other and are referred to as the input image for convenience of the description hereinafter.

In the specification, "region" is a term which refers to part of the image and means at least one pixel block or a set of pixel blocks. Also, the pixel block means a set of adjacent pixels including at least one pixel.

According to an embodiment, the processor 130 may identify an edge area in the input image if the mode for assisting the person with impaired vision is executed. The processor 130 may identify an edge enhancement area in which the edge area is to be expanded to a preset thickness.

The processor 130 may process the input image such that a first area included in the edge enhancement area includes a first color and a second area of the edge enhancement area includes a second color.

According to an embodiment, the first area and the second area may be areas identified relative to the edge included in the edge enhancement area. For example, the first area may be an area on one side relative to the edge, and the second area may be an area on a side opposite to first area relative to the edge.

According to an embodiment, the first color may be a preset color. According to an embodiment, the second color is a color in which a color corresponding to the edge area is blended with the preset color in the input image.

According to an embodiment, local contrast information corresponding to the edge enhancement area may be identified, and a weight value may be identified based on the local contrast information. According to an embodiment, the processor 130 may identify the local contrast information corresponding to the second area. According to an embodiment, the processor 130 may identify a first weight value based on the local contrast information and identify a second color by applying the first weight value to the preset color and applying a second weight value identified based on the first weight value to a color corresponding to the edge enhancement area. For example, the processor 130 may identify a local contrast value corresponding to each pixel included in the edge enhancement area, identify a first weight value corresponding to each pixel based on the local contrast value, and apply the identified first weight value to the preset color. The processor 130 may identify a second color corresponding to each pixel by applying a second weight value identified based on the first weight value to the input color corresponding to each pixel and blending the preset color to which the first weight value is applied and the input color to which the second weight value is applied.

According to an embodiment, the processor 130 may, if one side is a black area (or an area close to black) relative to the edge area and the other side is a white area (or an area close to white), identify the edge enhancement area which is to be expanded to the preset thickness in one side.

According to an embodiment, the processor 130 may, if both sides relative to the edge area are white areas (or areas close to white), identify the edge enhancement area which is to be expanded to the preset thickness by expanding it to the same thickness in both sides.

FIG. 2b is a block diagram specifically illustrating a configuration of an electronic apparatus according to one or more embodiments.

According to FIG. 2b, the electronic apparatus 100' may include memory 110, a display 120, one or more processors 130, a user interface 140, a communication interface 150, a speaker 160, and a camera 170. The detailed description of components overlapped with the components shown in FIG. 2a among the components shown in FIG. 2b is omitted.

The user interface 140 may be implemented as a device such as a button, a touch pad, a mouse, and a keyboard or may be implemented as a touch screen, or the like capable of performing the display function and also a manipulation input function together.

According to an embodiment, the user interface 140 may receive a user command for selecting the mode for assisting the person with impaired vision, a user command for selecting a thickness and/or a color of a contour (or edge) in the mode for assisting the person with impaired vision, etc.

The communication interface 150 may be implemented as various interfaces according to an embodiment of the electronic apparatus 100'. For example, the communication interface 150 may perform communication with an external device, an external storing medium (e.g. USB memory), an external server (e.g. webhard), or the like through a communication method such as Bluetooth, AP-based Wi-Fi (Wi-Fi, a Wireless LAN network), Zigbee, a wired/wireless local area network (LAN), a wide area network (WAN), Ethernet, IEEE 1394, a High-Definition Multimedia Interface (HDMI), a Universal Serial Bus (USB), a Mobile High-Definition Link (MHL), Audio Engineering Society/European Broadcasting Union (AES/EBU), an optical method, or a coaxial method. According to an embodiment, the communication interface 150 may perform communication with the other electronic apparatus, the external server, and/or a remote control device, etc.

The speaker 160 is a component outputting not only various audio data but also various alarm sound, voice messages, or the like. The processor 130 may control the speaker 160 to output feedback or various alarms in an audio form according to various examples of the disclosure.

The camera 170 may be turned on according to a preset event and perform capturing. The camera 170 may convert the captured image to an electric signal and generate image data based on the converted signal. For example, the camera 170 may include at least one of a general (or basic) camera and a super wide angle camera.

Besides, the electronic apparatus 100' may include a sensor, a microphone, and the like according to an embodiment.

The sensor may include various types of sensors such as a touch sensor, a proximity sensor, an acceleration sensor (or a gravity sensor), a geomagnetic sensor, a gyro sensor, a pressure sensor, a position sensor, a distance sensor, an illuminance sensor, etc.

The microphone is a component for receiving and converting a user voice or other sound to audio data. According to another example, the electronic apparatus 100' may receive user sound inputted by an external device through the communication interface 150.

FIG. 3 is a flow chart illustrating a method of controlling an electronic apparatus according to one or more embodiments.

According to FIG. 3, in an operation 310, an electronic apparatus 100 may identify whether the mode for assisting the person with impaired vision is executed (i.e., activated).

If the mode for assisting the person with impaired vision is executed (S310:Y), in an operation 320, the electronic apparatus 100 may identify the edge area (or the contour area) in the input image. The edge of the image is a line indicating a boundary of the object or pattern and may be mainly formed due to brightness or a change of a color.

According to an embodiment, the electronic apparatus 100 may detect an edge area in the image based on edge detection, Hough transform, contour extraction, etc.

Edge detection is a technology which finds parts of an image where brightness or a color is rapidly changed and may detect a distinct edge in the image by using a sobel filter, a canny filter, a laplacian filter, etc.

The Hough transform is a technology which detects an edge having a geometric shape such as a line or a circle and may detect the edge by converting an equation of a line or a circle in an image space to a parameter space.

Contour extraction is a technology which detects a contour indicating an outside of an object in the image and may detect the outside of the object by detecting an edge, and then approximating the same.

In an operation 330, the electronic apparatus 100 may identify an edge enhancement area in which the edge area is to be expanded to a preset thickness.

The edge enhancement is a technology which distinctively enhances an edge in the image, and according to an embodiment, the electronic apparatus 100 may expand and provide the edge area for edge enhancement.

According to an embodiment, the electronic apparatus 100 may expand the detected edge area to the preset thickness to enhance the edge. For example, the preset thickness may be determined according to selection of the user, but is not limited thereto. For example, the extension thickness of the edge may be automatically determined based on user profile information or the extension thickness of the edge may be automatically determined according to a characteristic of the image.

In an operation 340, the electronic apparatus 100 may process the input image such that one area included in the edge enhancement area includes a first color and the other area of the edge enhancement area includes a second color.

According to an embodiment, the first color may be a preset color. For example, the preset color may include any one of black, green, or yellow. In general, the person with impaired vision has high sensitivity to a green color or a yellow color in a state that an ability to recognize a contrast ratio is lowered, and thus any one of black, green, or yellow may be used as an edge enhancement color. For example, the preset color may be determined according to selection of the user, but is not limited thereto. For example, the edge enhancement color may be automatically determined based on user profile information, or the edge enhancement color may be automatically determined according to a characteristic of the image.

According to an embodiment, the second color may be a color in which a color corresponding to the edge area is blended with the preset color in the input image.

For example, the electronic apparatus 100 may identify a second color by applying a first weight value to a preset color, applying a second weight value identified based on the first weight value to a color corresponding to the edge enhancement area, and then, blending the colors to which the weight values are applied. For example, a sum of the first weight value and the second weight value may be 1, and if the first weight value is identified, the second weight value may be calculated as "1 - the first weight value."

In an operation 350, the electronic apparatus 100 may display the processed input image.

As aforementioned, the mode for assisting the person with impaired vision may help the person with impaired vision view an image through the edge enhancement according to an embodiment.

In FIG. 3, sequences are mapped onto all operations for convenience of the description. However, the process is not limited to the disclosed sequence.

FIG. 4 is a flow chart illustrating a method of controlling an electronic apparatus according to one or more embodiments.

The detailed description of operations overlapped with the operations shown in FIG. 3 among operations shown in FIG. 4 is omitted.

According to FIG. 4, in an operation 410, an electronic apparatus 100 may identify whether the mode for assisting the person with impaired vision is executed.

If the mode for assisting the person with impaired vision is executed (S410:Y), in an operation 420, the electronic apparatus 100 may obtain a local contrast map based on the input image.

The local contrast may mean information locally indicating a difference in brightness between pixels in the image. The local contrast may indicate how definitely a contrast is made in each part of the image. As the local contrast becomes high, a difference in brightness between adjacent pixels may be large.

According to an embodiment, the electronic apparatus 100 may define a window around each pixel of the image and calculate a difference of brightness between pixels within the relevant window to obtain the local contrast map.

In an operation 430, the electronic apparatus 100 may identify the edge area in the input image.

In an operation 440, the electronic apparatus 100 may identify an edge enhancement area in which the edge area is to be expanded to a preset thickness.

According to an embodiment, the electronic apparatus 100 may identify the edge enhancement area by expanding the edge area by using a dilation filter. For example, a thickness by which the edge area is expanded may be different according to a size of the dilation filter. For example, the edge enhancement thickness may be determined according to selection of the user, wherein the electronic apparatus 100 may apply a different size of the dilation filter to the edge area based on the determined edge enhancement thickness.

In an operation 450, the electronic apparatus 100 may identify local contrast information corresponding to the edge enhancement area based on the local contrast map.

In an operation 460, the electronic apparatus 100 may identify a weight value based on the local contrast information. According to an embodiment, the electronic apparatus 100 may identify a weight value corresponding to the local contrast information corresponding to the edge enhancement area, that is, the expanded edge area. For example, the local contrast value is high at the edge, and the local contrast value may be reduced as being further away from the edge. Accordingly, the weight value is high at the edge, and the weight value may be reduced as a distance from the edge increases.

In an operation 470, the electronic apparatus 100 may identify the second color by blending a color corresponding to the edge enhancement area and the preset first color based on the identified weight value.

According to an embodiment, the electronic apparatus 100 may identify a second color by applying the first weight value corresponding to local contrast information corresponding to the edge enhancement area to the preset first color and applying a second weight value identified based on the first weight value to a color corresponding to the edge enhancement area. For example, the electronic apparatus 100 may identify a local contrast value corresponding to each pixel included in the edge enhancement area and identify a first weight value corresponding to each pixel based on the local contrast value. For example, the electronic apparatus 100 may identify a second color by applying a second weight value identified based on the first weight value to the input color corresponding to each pixel and blending the preset first color to which the first weight value is applied and the input color to which the second weight value is applied. For example, because the weight value corresponding to the local contrast value is high and the weight value may be reduced as a distance from the edge increases, the first weight value may be reduced as the distance from the edge increases, and the second weight value may be increased as a distance from the edge increases.

In an operation 480, the electronic apparatus 100 may process the input image such that one area included in the edge enhancement area includes the preset first color and the other area of the edge enhancement area includes the second color.

In an operation 490, the electronic apparatus 100 may display the processed input image.

According to an embodiment, the electronic apparatus 100 may, if the local contrast value of the edge area is equal to or greater than the preset value, that is, if a difference in brightness of both areas relative to the edge area is equal to or greater than the preset value, perform the edge enhancement processing, but the disclosure is not limited thereto.

In FIG. 4, sequences are mapped onto all operations for convenience of the description. However, the process is not limited to the disclosed sequence.

FIG. 5 is a view illustrating a method of detecting an edge according to one or more embodiments.

According to FIG. 5, the electronic apparatus 100 may detect an edge based on the blurred image 510. It is also possible to detect an edge based on an image which is not burred. According to an embodiment, the electronic apparatus 100 may convert a RGB domain image to a YUV domain and perform edge detection based on a Y value image in a YUV domain.

The electronic apparatus 100 may obtain a first value, for example, Gh[x][y] and Gv[x][y] by applying the first filter 521 and the second filter 522 to the blurred image 510. For example, the first filter 521 may be a sobel filter in a vertical direction, and the second filter 522 may be a sobel filter in a horizontal direction, but the disclosure is not limited thereto. For example, the first filter 521 and the second filter 522 may be a 3*3 or 5*5 filter, but the disclosure is not limited thereto.

The electronic apparatus 100 may obtain a second value, Gmag[x][y], based on a first value, for example, Gh[x][y] and Gv[x][y]. For example, the electronic apparatus 100 may obtain Gmag[x][y] based on an equation 530 shown in FIG. 5. For example, Gmag[x][y] may be a magnitude value of a gradient.

The electronic apparatus 100 may obtain an edge strength value, for example, e[x][y], based on a second value. For example, the electronic apparatus 100 may obtain an edge strength value, for example, a value e, by applying a threshold value based on Gmag[x][y] based on a relation 540 shown in FIG. 5 (550). For example, threshold values T1 and T2 may be parameters which may be adjusted by H/W registers.

FIGS. 6A to 6C are views illustrating a method of expanding an edge area according to one or more embodiments.

Contour expansion is a process for expanding an edge detected in the image in accordance with a fixed rule. According to an embodiment, the electronic apparatus 100 may expand the edge area by using a filter. For example, the electronic apparatus 100 may expand the edge area by using a dilation filter. In general, because the edge indicates a boundary between strong pixels in the image, if the dilation filter is used, a local characteristic around the edge may be increased and the edge area may be expanded.

According to an embodiment, the electronic apparatus 100 may adjust the edge to be a desired thickness by using the dilation filter as shown in FIGS. 6A to 6B. For example, it is assumed that the thickness of the edge may be adjusted in three levels: weak, medium, and strong.

For example, as shown in FIG. 6a, if a 1*1 dilation filter is applied to edge strength e[x][y] positioned at the center of the image 610, the thickness of the edge may be a weak level 611. For example, the weak level may be a level maintaining an original thickness.

For example, as shown in FIG. 6b, if a 3*3 dilation filter is applied to edge strength e[x][y] positioned at the center of the image 620, the thickness of the edge may be a medium level 621. For example, the medium level may be in a state that a thickness is to be expanded to a certain thickness compared to an original thickness.

For example, as shown in FIG. 6c, if a 5*5 dilation filter is applied to edge strength e[x][y] positioned at the center of the image 620, the thickness of the edge may be a strong level 631. For example, the strong level may be in a state that a thickness is more expanded to a certain thickness compared to the thickness in the medium level.

FIG. 7 illustrates a method of processing an edge enhancement area according to one or more embodiments.

According to an embodiment, the electronic apparatus 100 may process an edge enhancement area by blending a pixel value of the input image and the preset first color. For example, the preset first color may be a color selected for edge enhancement in the mode for assisting the person with impaired vision. For example, the first color may be one color among black, yellow, or green but is not limited thereto.

According to FIG. 7, the electronic apparatus 100 may perform enhancement processing 720 on the edge area in the input image 710. According to an embodiment, the electronic apparatus 100 may process an edge enhancement area by blending a pixel value of the input image and the preset first color based on a blending weight value.

According to an embodiment, the electronic apparatus 100, if the blending weight value is 1, may process the edge enhancement area 732 in which the edge area 731 is expanded by applying a weight value 1 to the first color and applying a weight value 0 to the pixel value of the input image.

According to an embodiment, the electronic apparatus 100, if the blending weight value is 0.5, may process the edge enhancement area 733 by applying a weight value 0.5 to the first color and applying a weight value 0.5 to the pixel value of the input image.

According to an embodiment, the electronic apparatus 100, if the blending weight value is 0.3, may process the edge enhancement area 734 by applying a weight value 0.3 to the first color and applying a weight value 0.7 to the pixel value of the input image.

According to an embodiment, the electronic apparatus may calculate values Y, U, V for edge enhancement processing based on Equation 1 below.

Equation 1:

$$Y_{out}[x][y]=((1-W_Y)*Y_{in}[x][y]+W_Y*Y_{edge})$$

$$U_{out}[x][y]=((1-W_Y)*Y_{in}[x][y]+W_Y*Y_{edge})$$

$$V_{out}[x][y]=((1-W_Y)*Y_{in}[x][y]+W_Y*Y_{edge})$$

$Y_{in}[x][y]$ may be a pixel value of the input pixel, and $Y_{edge}$ may be a preset first color for edge enhancement processing.

According to an embodiment, as shown in FIG. 7, the fixed weight value $W_Y$ does not apply to the edge enhancement area, a different weight value may apply to each area according to local contrast information.

FIG. 8 is a view illustrating a method of obtaining local contrast information according to one or more embodiments.

According to FIG. 8, the electronic apparatus 100 may downsample (or downscale) an input image 810 to obtain a downsampled image 820 and obtain a first local contrast map 830 by measuring the local contrast value based on the downsampled image 820.

The electronic apparatus 100 may obtain a second local contrast map 840 of an original size by upsampling (or upscaling) the first local contrast map 830. For example, the second local contrast map 840 may be a smoothed map.

According to an embodiment, the electronic apparatus 100 may calculate a color of the edge enhancement area based on the second local contrast map 840. For example, the electronic apparatus 100 may determine a weight value for calculating a color of the edge enhancement area based on the second local contrast map 840.

In the aforementioned example, it is described that a local contrast map is obtained by downsampling the input image 810 to reduce operation quantity, but the disclosure is not limited thereto. For example, a third local contrast map 850 may be obtained by measuring a local contrast value based on the input image 810, and a color of the edge enhancement area may be calculated based on the third local contrast map 850.

FIGS. 9A and 9B are views illustrating a method of obtaining local contrast information of an edge enhancement area according to one or more embodiments.

According to FIG. 9A, the electronic apparatus 100 may, if the local area 911 including the edge is identified in the input image 910, obtain an edge map based on the image 920 corresponding to the local area 911 (930).

The edge map is an image visually exhibiting an edge in the image, wherein it may be generated by a contour detection algorithm and may be visually expressed by enhancing a point where light and shade are largely changed in the image. The edge detection algorithm may sense a change of light and shade or a color between pixels in the image, detect the contour, and visualize its result as the edge map. The edge map may be expressed as a black and white or gray scale image in general, wherein part with the edge may be expressed with a white or bright color, and part without the edge may be expressed with a black or dark color.

According to an embodiment, the electronic apparatus 100 may divide the edge enhancement area into two areas relative to the edge area based on the edge threshold value in the edge map. For example, in order to identify the edge, light and shade of the pixel corresponding to the edge or pixel strength should exceed a specific threshold value, wherein the threshold value may be referred to as an "edge threshold value". The edge threshold value may be set by the user or may be automatically determined. For example, the user may manually adjust a threshold value to determine of which strength a change is considered as an edge. For example, if the edge threshold value is automatically determined, an optimum threshold value may be determined according to a characteristic of the image or the algorithm.

According to an embodiment, the electronic apparatus 100 may perform edge expansion processing on the edge area included the edge map (940).

According to an embodiment, the electronic apparatus 100 may measure a local contrast value corresponding to the expanded edge enhancement area (950).

For example, according to FIG. 9b, a local contrast value 920 corresponding to the edge enhancement area may be obtained by measuring a local contrast value corresponding to the edge enhancement area in the input image 910.

FIGS. 10a and 10b are views illustrating a method of enhancing an edge according to one or more embodiments.

According to FIG. 10a, the electronic apparatus 100 may identify a color of the edge area 1010 based on the local contrast value corresponding to the edge area 1010 identified in the input image 1000.

According to an embodiment, the electronic apparatus 100 may perform edge enhancement processing by applying different colors to a first area 1011 corresponding to a relatively dark area and a second area 1012 corresponding to a relatively bright area in the edge area 1010.

For example, the electronic apparatus 100 may perform edge enhancement processing on the first area 1011 corresponding to a dark area with the preset first color. For example, the preset first color may include any one of yellow or green.

For example, the electronic apparatus 100 may perform edge enhancement processing on the second area 1012 corresponding to a bright area with the preset first color applied to the first area 1011 and the second color determined based on a color of the input image corresponding to the second area 1012.

According to an embodiment, the electronic apparatus 100 may identify a first weight value based on a local contrast value corresponding to the second area 1012 (1020) and may identify a second weight value based on the first weight value. For example, a sum of the first weight value and the second weight value may be 1.

According to an embodiment, the electronic apparatus 100 may identify a second color by applying a first weight value to the preset first color and applying a second weight value to a color of the input image corresponding to the second area 1012. For example, the electronic apparatus 100 may identify a second color corresponding to each pixel included in the second area 1012. For example, the second color may be a color in which the preset first color and a color of the input image are blended for each pixel based on the first weight value and the second weight value.

According to an embodiment, the electronic apparatus 100 may identify a second color by converting a domain R, G, B of the input image to a domain Y, U, V and applying weight values corresponding to values Y, U, V to the domain Y, U, V. For example, the electronic apparatus 100 may identify a second color corresponding to each pixel included in the second area 1012 by converting a color of the input image corresponding to the second area 1012 to the domain Y, U, V, converting the first color to the domain Y, U, V, applying a weight value $W_Y$, $W_U$, $W_V$ to each of the values Y, U, V of the first color, applying a weight value $1-W_Y$, $1-W_U$, $1-W_V$ to each of the values Y, U, V of the color of the input image, blending the values to which the weight values applies in the same method as Equation 1.

According to FIG. 10B, the electronic apparatus 100 may apply a different enhancement processing method by dividing the edge enhancement area 1030 into a plurality of areas 1031, 1032. The edge enhancement area 1030 may be an area in which the edge area is expanded.

According to an embodiment, the electronic apparatus 100 may perform edge enhancement processing on the first area 1031 among the edge enhancement area 1030 with the preset first color. For example, the preset first color may include any one of black, yellow, or green. For example, the first area 1031 may be an edge enhancement area included in the relatively dark area relative to the edge.

According to an embodiment, the electronic apparatus 100 may perform edge enhancement processing on the second area 1032 among the edge enhancement area 1030 by blending a color applied to the first area 1031 (e.g. a green color) and a color corresponding to the input image (e.g. a red color). For example, the second area 1032 may be an edge enhancement area included in the relatively bright area relative to the edge.

According to an embodiment, the electronic apparatus 100 may identify a first weight value $W_{Y,U,V}$ based on a local contrast value corresponding to the second area 1032 and may identify a second weight value 1- $W_{Y,U,V}$ based on the first weight value. For example, a sum of the first weight value and the second weight value may be 1.

According to an embodiment, the electronic apparatus 100 may identify a second color by applying the first weight value $W_{Y,U,V}$ to the values Y, U, V of the preset first color and applying the second weight value 1-$W_{Y,U,V}$ to the values Y, U, V of the input color corresponding to the second area 1032. For example, the electronic apparatus 100 may identify a second color corresponding to each pixel included in the second area 1032. For example, the second color may be a color in which the preset first color and a color of the input image are blended for each pixel based on the first weight value $W_{Y,U,V}$ and the second weight value 1-$W_{Y,U,V}$.

FIG. 11 is a flow chart illustrating a method of controlling an electronic apparatus according to one or more embodiments.

The detailed description of operations overlapped with the operations shown in FIGS. 3 and 4 among operations shown in FIG. 11 is omitted.

According to FIG. 11, in an operation 1110, an electronic apparatus 100 may identify whether the mode for assisting the person with impaired vision is executed.

If the mode for assisting the person with impaired vision is executed (S1110:Y), in an operation 1120, the electronic apparatus 100 may obtain a local contrast map based on the input image.

In an operation 1130, the electronic apparatus 100 may identify the edge area in the input image.

In an operation 1140, the electronic apparatus 100 may identify an edge enhancement area in which the edge area is to be expanded to a preset thickness.

In an operation 1150, the electronic apparatus 100 may identify local contrast information corresponding to the edge enhancement area based on the local contrast map.

In an operation 1160, the electronic apparatus 100 may identify a weight value based on the local contrast information and the pixel shift information.

The pixel shift is work for moving pixels of the image a certain distance or in a certain direction, and is a technology for mitigating a burn-in phenomenon which may occur when the static image or the same image is displayed on the screen for a long time.

In general, the display outputs data in a fixed pixel position, and the pixel shift periodically changes this position, and thus it may be prevented that excessive currents are focused on a specific position. That is, burn-in possibility may be reduced by uniformly distributing an electric burden between pixels. Also, the pixel shift may be used for increasing a refresh rate of the screen. Human eyes more easily recognize a moving image as the pixel slightly moves from an original position, and thus a better viewing experience may be provided in the game or the video content.

According to an embodiment, the electronic apparatus 100 may compare a pixel movement distance and a thickness of the edge enhancement area according to the pixel shift to determine a lower bound of the weight value. For example, the electronic apparatus 100 may, if a thickness of the edge enhancement area is included in the pixel movement distance, maintain the lower bound of the weight value to be the preset value. For example, the electronic apparatus 100 may, if a thickness of the edge enhancement area is not included in the pixel movement distance, adjust the lower bound of the weight value to be a value lower than the preset value. This is for preventing possible pixel deterioration by reducing the weight value applied to the preset color because there is high possibility of pixel deterioration if the preset color is applied to the edge enhancement area when a thickness of the edge enhancement area is thicker than a pixel movement distance.

In an operation 1170, the electronic apparatus 100 may identify the second color by blending a color corresponding to the edge enhancement area and the preset first color based on the identified weight value.

In an operation 1180, the electronic apparatus 100 may process the input image such that one area included in the edge enhancement area includes the preset first color and the other area of the edge enhancement area includes a second color.

In an operation 1190, the electronic apparatus 100 may display the processed input image.

In FIG. 11, sequences are mapped onto all operations for convenience of the description,. However, the process is not limited to the sequence disclosed herein.

FIGS. 12a and 12b are views illustrating a method of enhancing an edge in accordance with a thickness of the edge according to one or more embodiments.

According to an embodiment, the electronic apparatus 100 may adjust a weight value for determining an enhancement color according to a thickness of the edge enhancement area.

According to an embodiment, the electronic apparatus 100 may, if a thickness of the edge enhancement area is less than a threshold value, maintain the lower bound of the weight value applied to the preset enhancement color to be the preset value in the blending color, that is, the color applied to the second area. This is for maintaining an enhancement effect even if being further away from the center when the enhancement edge is thin.

For example, as shown in FIG. 12a, if a thickness of the edge enhancement area is set as a value less than the threshold value (e.g. "weak" of strong/medium/weak), a relatively small value may be applied to a dilation factor of the dilation filter. The dilation factor may be a multiple factor about what pixel edge 1 pixel edge becomes after dilation. In this case, the preset value LB_weak may be set as a lower bound value.

According to an embodiment, the electronic apparatus 100 may, if a thickness of the edge enhancement area is equal to or greater than a threshold value, adjust the lower bound of the weight value applied to the preset enhancement color to a value lower than the preset value in the blending color, that is, the color applied to the second area. This is for setting a relatively high weight value with respect to a pixel of the input image if the enhancement edge is thick.

For example, as shown in FIG. 12b, if a thickness of the edge enhancement area is set as a value less than the threshold value (e.g. "hard" of hard/medium/weak), a relatively large value may be applied to a dilation factor of the dilation filter. In this case, the lower bound value of the weight value may be adjusted to a value smaller than that of FIG. 12A, for example, 0. This reduces pixel deterioration because, when the enhancement edge is thick, even if the enhancement edge is not processed with a specific color, an enhancement effect is noticeable.

According to an embodiment, the electronic apparatus 100 may calculate a weight value w and a lower bound of the weight value based on Equation 2 and Equation 3.

Equation 2:

$$w = \text{Pixel_Shift}[1/n*(4\ \text{Direction Distance})]/\text{Dilation_Distance}[1/n*(4\ \text{Direction Distance})]$$

Here, Pixel_Shift[1/n*(4 Direction Distance)] may be an upper and lower/left and right movement distance according to a pixel shift, and Dilation_Distance[1/n*(4 Direction Distance)] may be an edge expansion thickness according to application of the dilation filter.

Equation 3:

$$LB = \text{Min}(\text{Max}(\text{LB_init} + \text{LB_step} * \text{round}(\omega+0.5), 0), \text{LB_weak})$$

Here, round() may be a round function, LB_init may be an initial value of the weight value, and LB_weak may be a value of the preset weight value applied to a "weak" level.

FIG. 13 is a view illustrating a method of identifying a color of an edge enhancement area according to one or more embodiments.

According to FIG. 13, the electronic apparatus 100 may process the first area 1311 corresponding to a relatively dark area relative to the edge in the edge enhancement area 1310 with the preset color (e.g. one color of black, yellow, and green). Accordingly, w=1 is applied to the preset color shown in a lower graph (1321), and a weight value 1-w=0 is not applied to a color corresponding to the input image of the relevant area (1322).

According to an embodiment, the electronic apparatus 100 may process the second area 1312 corresponding to a relatively bright area relative to the edge in the edge enhancement area 1310 with a color in which the preset color applied to the first area and a color of the input image are blended. For example, the weight value w may be applied to the preset color applied to the first area and may be applied to the weight value 1-w to the color of the input image. According to an embodiment, if it is assumed that the local contrast information corresponding to the second area 1312 is reduced as a distance to a right side relative to the edge is reduced as shown in FIG. 9, the local contrast information corresponding to the second area 1312 is reduced as a distance to an outside of the second area 1312 is reduced, and thus the weight value w applied to the preset color is gradually reduced (1331-1, 1331-2), and the weight value 1-w applied to the color of the input image is gradually increased (1332). Accordingly, a different weight value is applied to a horizontal pixel included in the second area 1312, and thus the input color is more noticeable as a distance to the outside in a horizontal direction is reduced. According to an embodiment, a blending gradient of the preset color applied to the second area 1312 may be different according to a minimum value (or lower bound) of the weight value w (1331-1, 1331-2).

According to an embodiment, the weight value w applied to the second area 1312 may be continuously reduced as a distance to the outside is reduced, but the disclosure is not limited thereto. For example, it is possible to process such that the weight value w is reduced stepwise by dividing the second area 1312 into a plurality of blocks in a horizontal direction and applying the same weight value to each block.

FIG. 14 is a view illustrating a method of identifying a color of an edge enhancement area according to one or more embodiments.

According to FIG. 14, the electronic apparatus 100 may process the first area 1411 corresponding to a relatively dark area relative to the edge in the edge enhancement area 1410 with the preset color (e.g. one color of black, yellow, and green). Accordingly, w=1 is applied to the preset color shown in a lower graph (1421), and a weight value 1-w=0 is not applied to a color corresponding to the input image of the relevant area (1422).

According to an embodiment, the electronic apparatus 100 may perform edge enhancement processing on the second area 1412 corresponding to the relatively bright area relative to the edge in the edge enhancement area 1410 by using only the preset color without using a color of the input image. For example, the electronic apparatus 100 may process the second area 1412 by applying only the weight value w to the preset color. For example, the weight value w may be applied to the preset color and the weight value 0 may be applied to the color of the input image. Accordingly, the weight value w is applied to the preset color as shown in the lower graph (1431), and the weight value 0 may be applied to a color corresponding to the input image of the relevant area (1432).

According to the various embodiments, a burn-in phenomenon and a color distortion phenomenon resulting from an edge enhancement function provided in the mode for assisting the person with impaired vision may be reduced.

The methods according to the various embodiments of the disclosure may be implemented only with a software upgrade or a hardware upgrade with respect to the existing electronic apparatus and/or a server.

Also, it is possible to implement the various embodiments of the disclosure through an embedded server included in the electronic apparatus or an external server of the electronic apparatus.

According to an embodiment of the disclosure, the various embodiments described above may be implemented as software including instructions stored in a machine (e.g. computer) readable storage medium. The machine refers to a device which calls instructions stored in the storage medium and is operable according to the called instructions, wherein the machine may include an electronic apparatus (e.g. an electronic apparatus A) according to the disclosed embodiments. If the instructions are executed by a processor, the processor may perform a function corresponding to the instructions directly or by using other components under control of the processor. The instructions may include a code generated or executed by a compiler or an interpreter. The machine readable storage media may be provided in a form of a non-transitory storage medium. Here, the term 'non-transitory' merely means that the storage medium does not include a signal and is tangible, wherein the term does not distinguish a case that data is stored in the storage medium semipermanently from a case that data is stored in the storage medium temporarily.

Also, according to an embodiment of the disclosure, the method according to the various embodiments described above may be provided to be included in a computer program product. The computer program product may be traded between a seller and a buyer as goods. The computer program product may be distributed in a form of a machine readable storage medium (e.g. compact disc read only memory (CD-ROM)) or may be on-line distributed via an application store (e.g. play store™). In the case of on-line distribution, at least part of the computer program product may be stored at least temporarily or may be generated temporarily in a storage medium such as memory of a server of a manufacturer, a server of an application store, or a relay server.

Also, each of components (e.g. a module or a program) according to the various embodiments may be configured as a single item or a plurality of items, wherein a partial subcomponent of the relevant subcomponents may be omitted, or another subcomponent may be further included in various embodiments. Mostly or additionally, some components (e.g. a module or a program) may be integrated into one item and may identically or similarly perform a function implemented by each of the relevant components before the integration. According to various embodiments, operations performed by a module, a program, or another component may be executed sequentially, in parallel, repetitively, or heuristically, at least part of the operations may be executed in different orders or be omitted, or another operation may be added.

As above, one or more embodiments of the present disclosure are shown and described, but the disclosure is not limited to the specific embodiments, and various modifications may be implemented by those skilled in the art without deviating from the gist of the disclosure claimed in the scope of claims, wherein these modifications should not be independently understood from the technical spirit or prospect of the disclosure.

## Claims

**1.** An electronic apparatus comprising:

a display comprising a spontaneous emission element;
memory storing one or more instructions; and
one or more processors configured to execute the one or more instructions,
wherein the one or more instructions, when executed by the one or more processors, cause the electronic apparatus to:

based on a mode for assisting a person with impaired vision being activated, identify an edge area of an input image;
identify an edge enhancement area of the input image and expand the edge area in the edge enhancement area to a preset thickness;
in the edge enhancement area, process the input image such that a first area corresponding to one direction relative to the edge area comprises a first color and a second area corresponding to a direction opposite to the one direction comprises a second color; and
provide the processed input image through the display,

wherein the first color comprises a preset color, and
wherein the second color comprises a blend of a color corresponding to the edge area and the preset color.

**2.** The electronic apparatus of claim 1, wherein the one or more instructions, when executed by the one or more processors, cause the electronic apparatus to:

identify local contrast information corresponding to the edge enhancement area;
identify a weight value based on the local contrast information; and
identify the second color by blending a color corresponding to the edge enhancement area and the preset color based on the identified weight value.

**3.** The electronic apparatus of claim 1, wherein the one or more instructions, when executed by the one or more processors, cause the electronic apparatus to:

identify local contrast information corresponding to the second area;
identify a first weight value based on the local contrast information;
identify a second weight value based on the first weight value; and
identify the second color by applying the first weight value to the preset color and applying the second weight value to a color corresponding to the edge enhancement area.

**4.** The electronic apparatus of claim 1, wherein the one or more instructions, when executed by the one or more processors, cause the electronic apparatus to, for each respective pixel included in the edge enhancement area:

identify a local contrast value corresponding to the respective pixel;
identify a first weight value corresponding to the respective pixel based on the local contrast value corresponding to the respective pixel;
apply the identified first weight value to the preset color;
apply a second weight value identified based on the first weight value corresponding to the respective pixel to an input color corresponding to the respective pixel; and
identify the second color by blending the preset color to which the first weight value is applied and the input color to which the second weight value is applied.

**5.** The electronic apparatus of claim 4, wherein the one or more instructions, when executed by the one or more processors, cause the electronic apparatus to:

based on a thickness of the edge enhancement area being less than a threshold value, maintain a lower bound of the first weight value to be a preset value; and
based on the thickness of the edge enhancement area being equal to or greater than the threshold value, adjust the lower bound of the first weight value to be lower than the preset value.

**6.** The electronic apparatus of claim 4, wherein the one or more instructions, when executed by the one or more processors, cause the electronic apparatus to:
identify a lower bound of the first weight value by comparing a pixel movement distance according to a pixel shift and a thickness of the edge enhancement area.

**7.** The electronic apparatus of claim 6, wherein the one or more instructions, when executed by the one or more processors, cause the electronic apparatus to:

based on the thickness of the edge enhancement area being included in the pixel movement distance, maintain the lower bound of the first weight value to be a preset value; and

based on the thickness of the edge enhancement area not being included in the pixel movement distance, adjust the lower bound of the first weight value to be lower than the preset value.

**8.** The electronic apparatus of claim 1, wherein the one or more instructions, when executed by the one or more processors, cause the electronic apparatus to:

identify local contrast information corresponding to the second area;
identify a first weight value based on the local contrast information; and
identify the second color by applying the first weight value to the preset color and applying a weight value 0 to a color corresponding to the edge enhancement area.

**9.** The electronic apparatus of claim 1, wherein the one or more instructions, when executed by the one or more processors, cause the electronic apparatus to:

based on one side relative to the edge area being a black area and a side opposite from the one side relative to the edge area being a white area, identify the edge enhancement area and expand the edge area in the edge enhancement area toward the one side to the preset thickness; and
based on the one side and the side opposite from the one side both being white areas, identify the edge enhancement area and expand the edge area in the edge enhancement area toward both the one side and the side opposite the one side to the preset thickness.

**10.** A method of controlling an electronic apparatus, comprising:

based on a mode of assisting a person with impaired vision being activated, identifying an edge area in an input image;
identifying an edge enhancement area of the input image and expanding the edge area in the edge enhancement area to a preset thickness;
in the edge enhancement area, processing the input image such that a first area corresponding to one direction relative to the edge area comprises a first color and a second area corresponding to a direction opposite to the one direction comprises a second color; and
displaying the processed input image,
wherein the first color comprises a preset color, and
wherein the second color comprises a blend of a color corresponding to the edge area and the preset color.

**11.** The method of claim 10, wherein the processing the input image comprises:

identifying local contrast information corresponding to the edge enhancement area;
identifying a weight value based on the local contrast information; and
identifying the second color by blending a color corresponding to the edge enhancement area and the preset color based on the identified weight value.

**12.** The method of claim 10, wherein the processing the input image comprises:

identifying local contrast information corresponding to the second area;
identifying a first weight value based on the local contrast information;
identifying a second weight value based on the first weight value; and
identifying the second color by applying the first weight value to the preset color and applying the second weight value to a color corresponding to the edge enhancement area.

**13.** The method of claim 11, wherein the processing the input image comprises, for each respective pixel included in the edge enhancement area:

identifying a local contrast value corresponding to the respective pixel;
identifying a first weight value corresponding to each pixel based on the local contrast value;
applying the identified first weight value to the preset color;
applying a second weight value identified based on the first weight value corresponding to the respective pixel to an input color corresponding to the respective pixel; and
identifying the second color by blending the preset color to which the first weight value is applied and the input color to which the second weight value is applied.

**14.** The method of claim 13, wherein the identifying the first weight value comprises:

based on a thickness of the edge enhancement area being less than a threshold value, maintaining a lower bound of the first weight value to be a preset value; and
based on the thickness of the edge enhancement area being equal to or greater than the threshold value, adjusting the lower bound of the first weight value to be lower than the preset value.

**15.** A non-transitory computer readable medium having instructions stored therein, which when executed by at least one processor of an electronic apparatus, cause the electronic apparatus to execute a method of operating the electronic apparatus, the method comprising:

based on a mode of assisting a person with impaired vision being activated, identifying an edge area in an input image;
identifying an edge enhancement area of the input image and expanding the edge area in the edge enhancement area to a preset thickness;
in the edge enhancement area, processing the input image such that a first area corresponding to one direction relative to the edge area comprises a first color and a second area corresponding to a direction opposite to the one direction comprises a second color; and
displaying the processed input image,
wherein the first color comprises a preset color, and
wherein the second color comprises a blend of a color corresponding to the edge area and the preset color.

# FIG. 1A

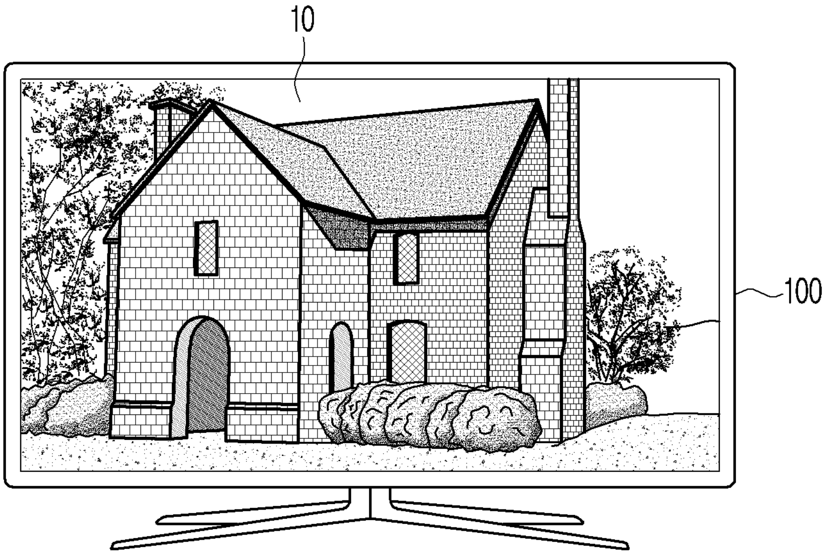

# FIG. 1B

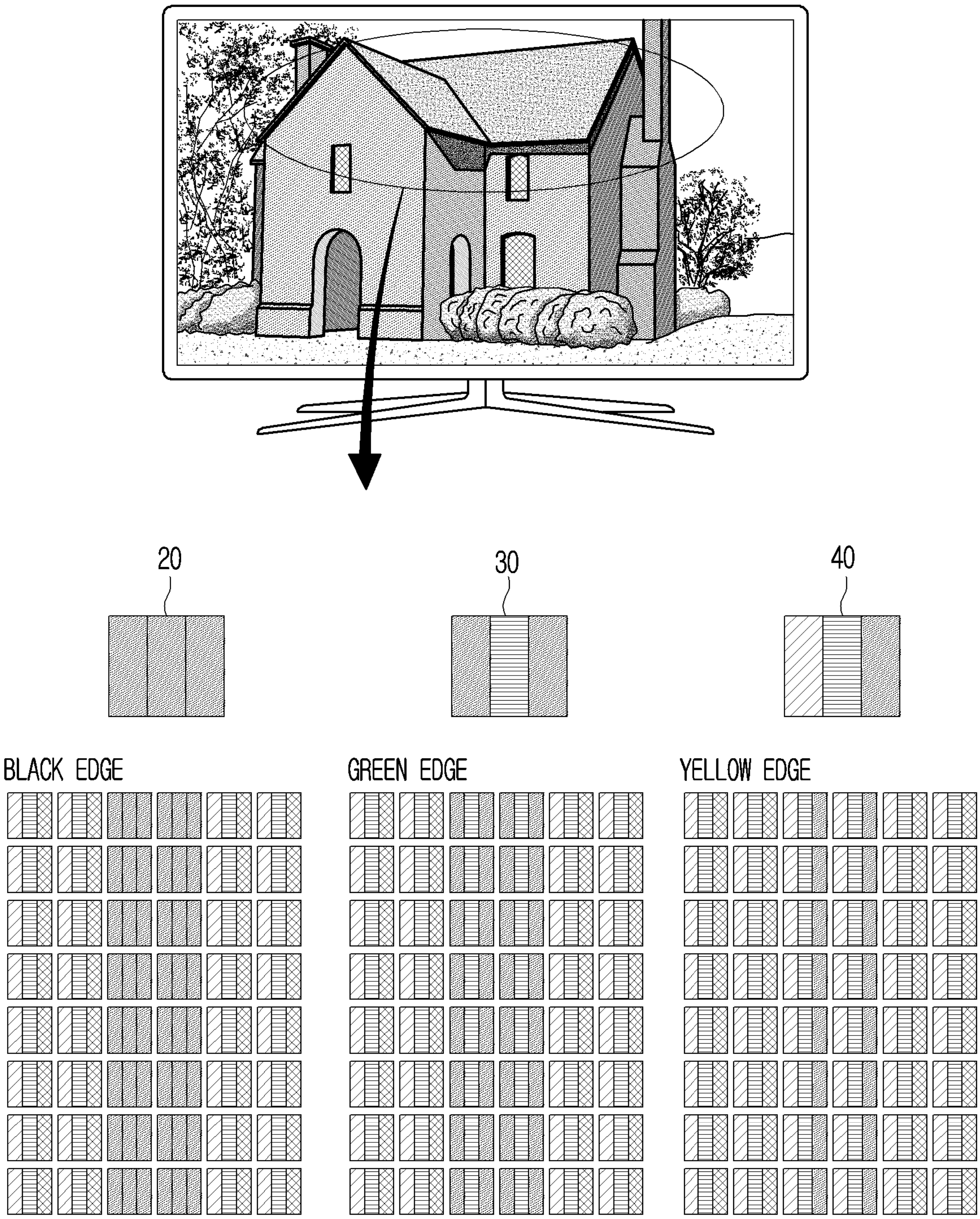

# FIG. 1C

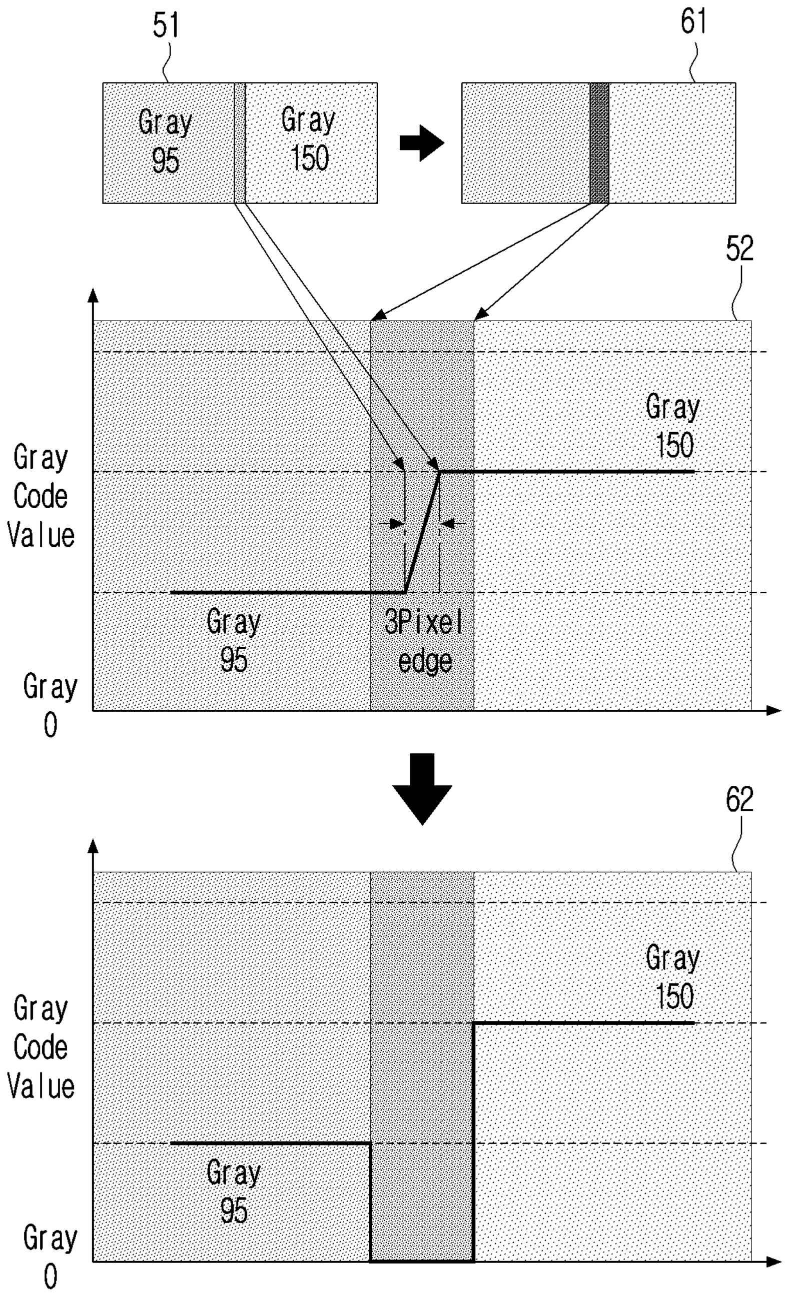
51
Gray
95
Gray
150
61
52
Gray
150
Gray
Code
Value
Gray
95
3Pixel
edge
Gray
0
62
Gray
150
Gray
Code
Value
Gray
95
Gray
0

FIG. 1D

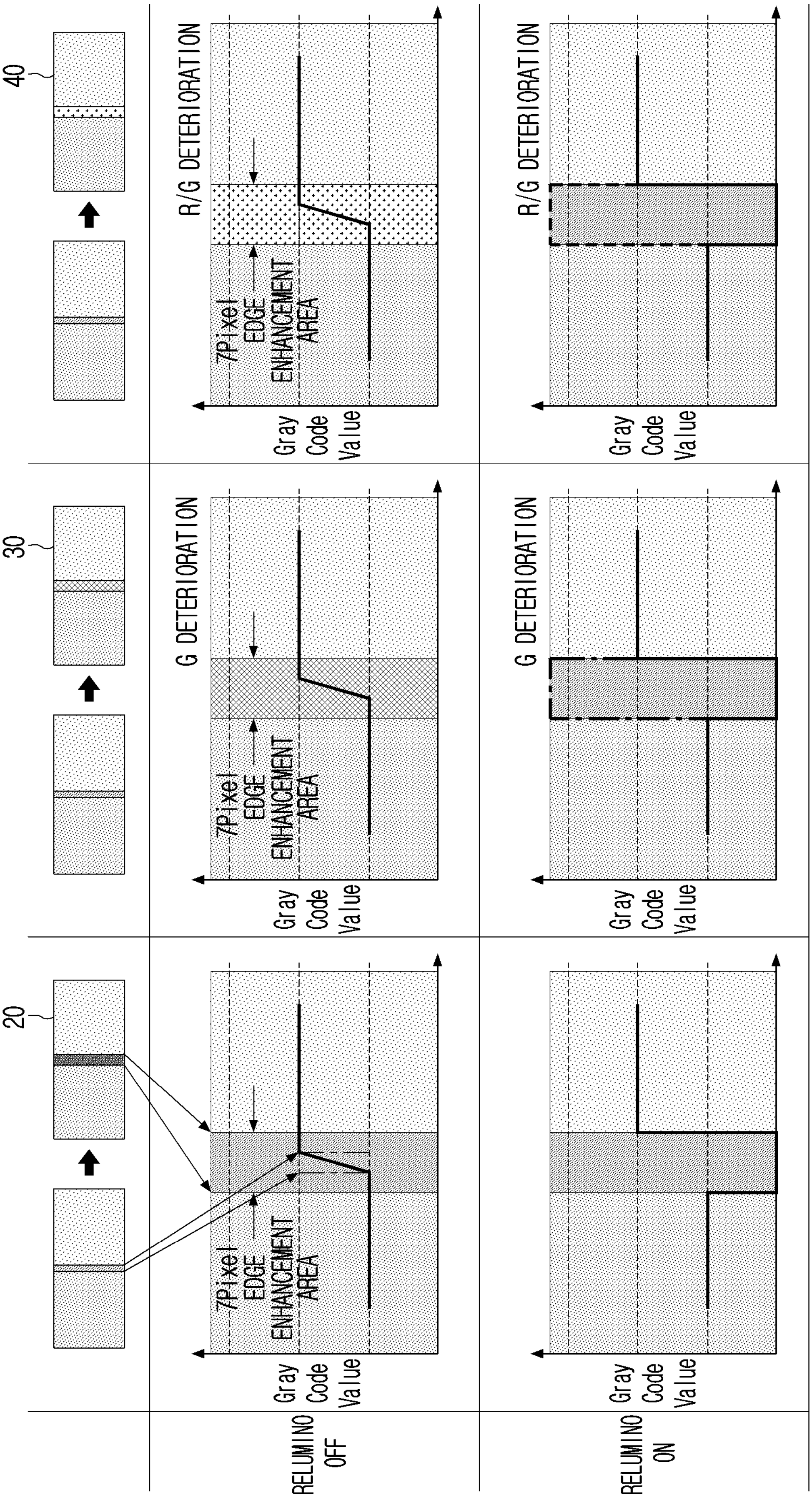
20
30
40
7Pixel EDGE ENHANCEMENT AREA
G DETERIORATION
R/G DETERIORATION
Gray Code Value
RELUMINO OFF
RELUMINO ON

FIG. 1E

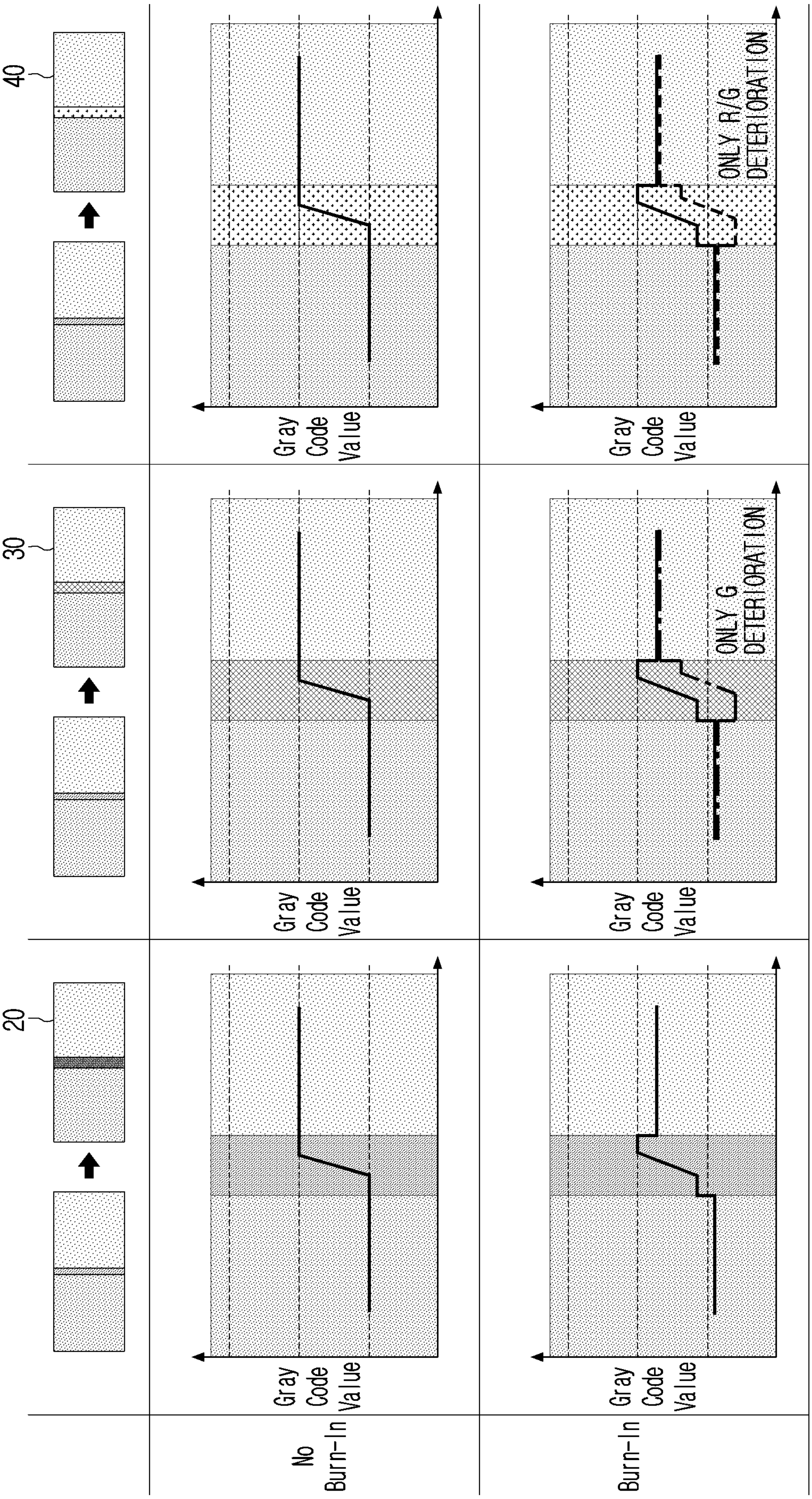
20
30
40
No Burn-In
Burn-In
Gray Code Value
ONLY G DETERIORATION
ONLY R/G DETERIORATION

FIG. 1F

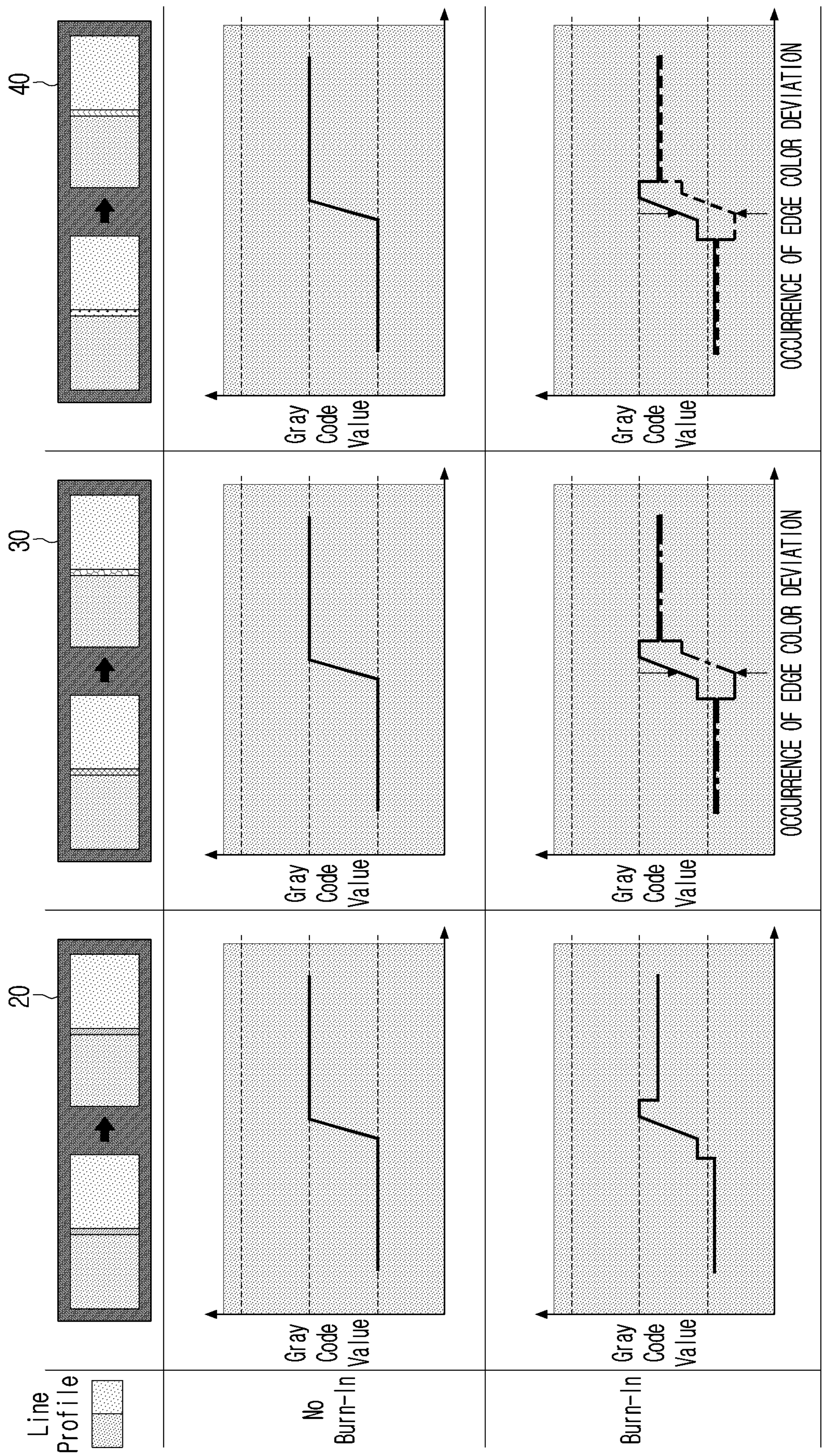
40
30
20
Line Profile
No Burn-In
Burn-In
Gray Code Value
Gray Code Value
Gray Code Value
Gray Code Value
Gray Code Value
Gray Code Value
OCCURRENCE OF EDGE COLOR DEVIATION
OCCURRENCE OF EDGE COLOR DEVIATION

FIG. 2A

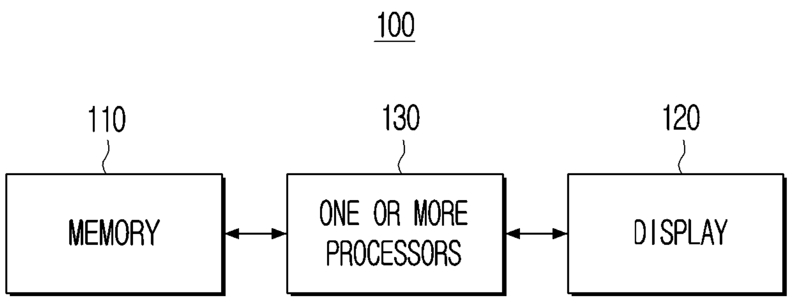

FIG. 2B

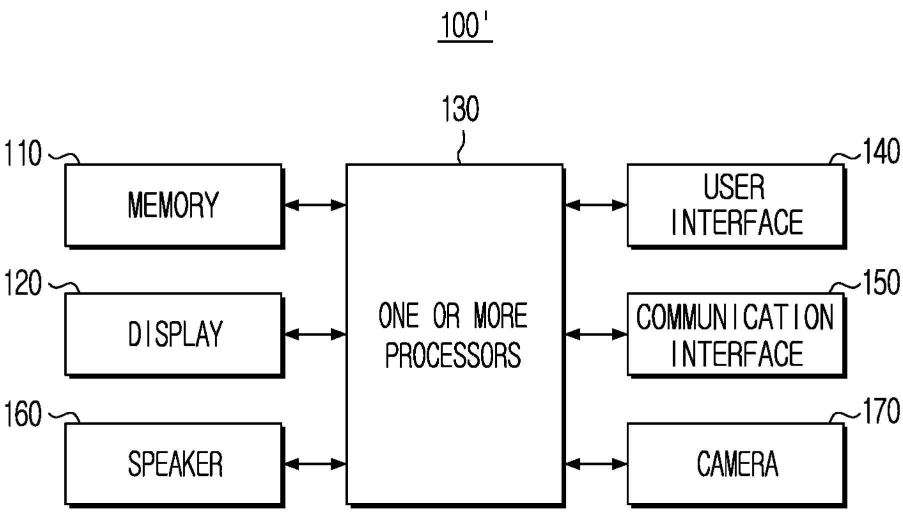
100'
130
110
MEMORY
120
DISPLAY
160
SPEAKER
ONE OR MORE PROCESSORS
140
USER INTERFACE
150
COMMUNICATION INTERFACE
170
CAMERA

FIG. 3

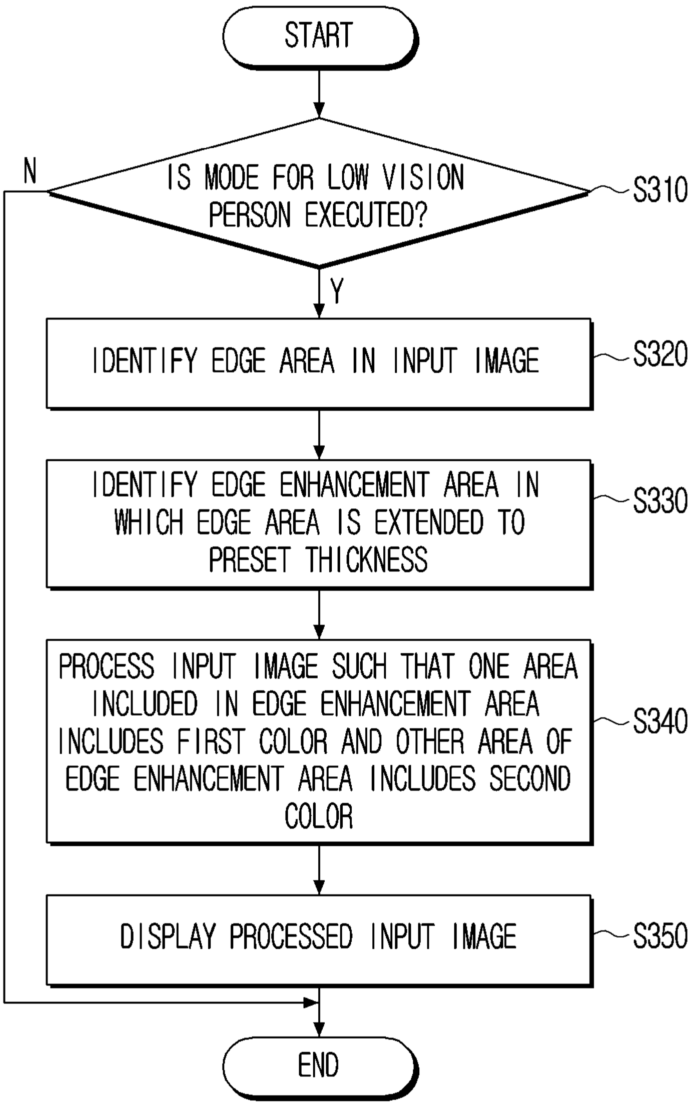
START
IS MODE FOR LOW VISION PERSON EXECUTED?
N
Y
S310
IDENTIFY EDGE AREA IN INPUT IMAGE
S320
IDENTIFY EDGE ENHANCEMENT AREA IN WHICH EDGE AREA IS EXTENDED TO PRESET THICKNESS
S330
PROCESS INPUT IMAGE SUCH THAT ONE AREA INCLUDED IN EDGE ENHANCEMENT AREA INCLUDES FIRST COLOR AND OTHER AREA OF EDGE ENHANCEMENT AREA INCLUDES SECOND COLOR
S340
DISPLAY PROCESSED INPUT IMAGE
S350
END

FIG. 4

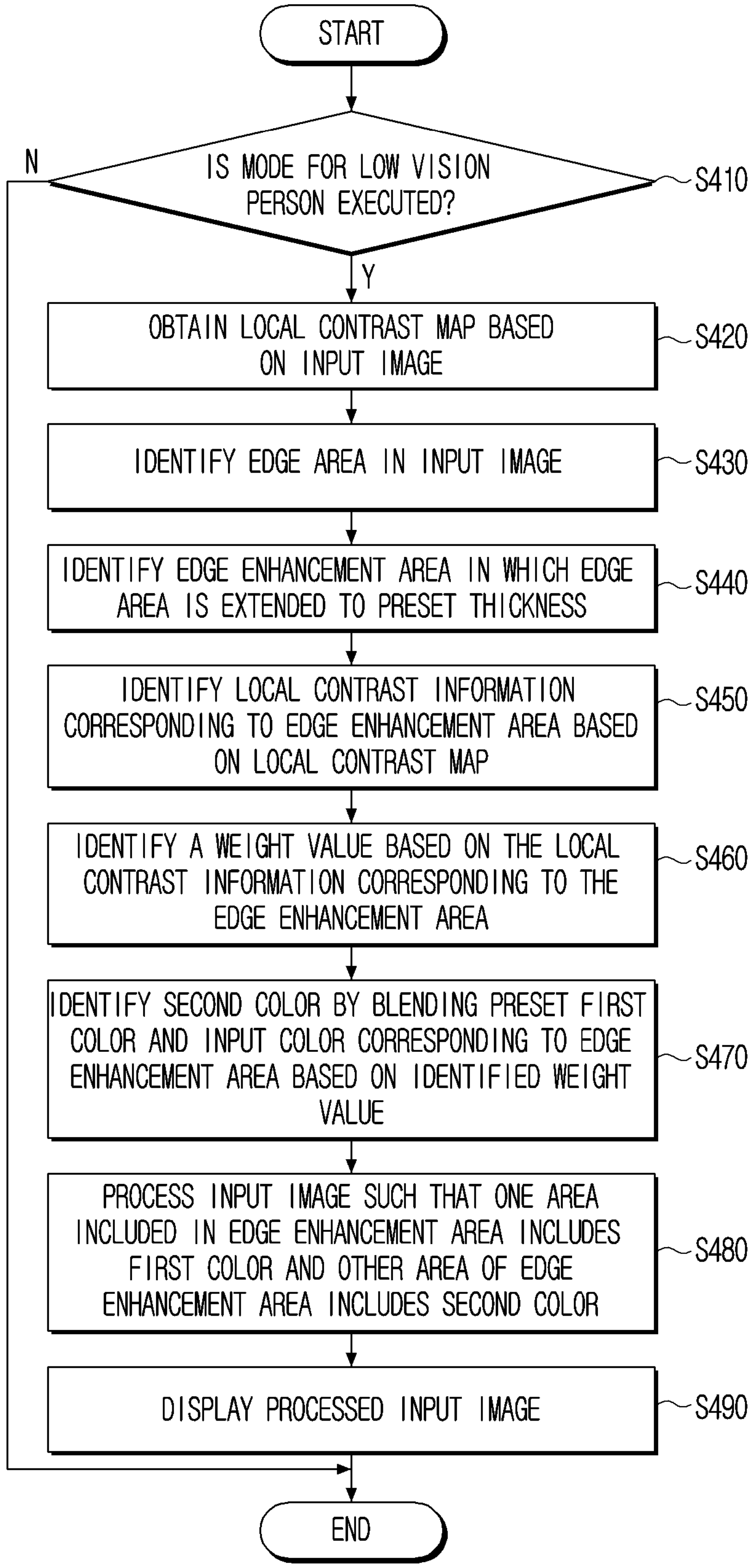
START
IS MODE FOR LOW VISION PERSON EXECUTED?
N
Y
S410
OBTAIN LOCAL CONTRAST MAP BASED ON INPUT IMAGE
S420
IDENTIFY EDGE AREA IN INPUT IMAGE
S430
IDENTIFY EDGE ENHANCEMENT AREA IN WHICH EDGE AREA IS EXTENDED TO PRESET THICKNESS
S440
IDENTIFY LOCAL CONTRAST INFORMATION CORRESPONDING TO EDGE ENHANCEMENT AREA BASED ON LOCAL CONTRAST MAP
S450
IDENTIFY A WEIGHT VALUE BASED ON THE LOCAL CONTRAST INFORMATION CORRESPONDING TO THE EDGE ENHANCEMENT AREA
S460
IDENTIFY SECOND COLOR BY BLENDING PRESET FIRST COLOR AND INPUT COLOR CORRESPONDING TO EDGE ENHANCEMENT AREA BASED ON IDENTIFIED WEIGHT VALUE
S470
PROCESS INPUT IMAGE SUCH THAT ONE AREA INCLUDED IN EDGE ENHANCEMENT AREA INCLUDES FIRST COLOR AND OTHER AREA OF EDGE ENHANCEMENT AREA INCLUDES SECOND COLOR
S480
DISPLAY PROCESSED INPUT IMAGE
S490
END

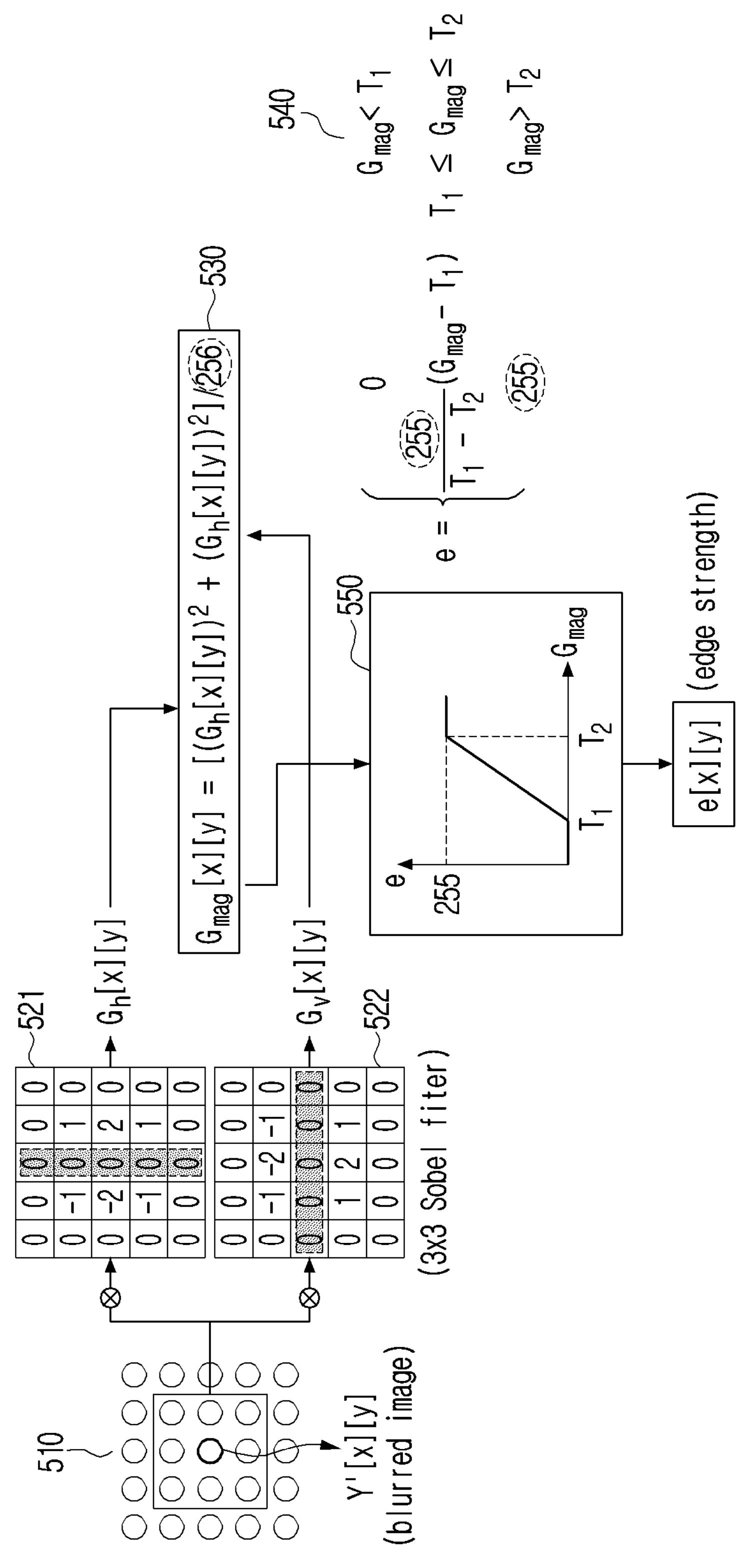
510
Y'[x][y]
(blurred image)
521
$G_h[x][y]$
522
$G_v[x][y]$
(3x3 Sobel fiter)
$G_{mag}[x][y] = [(G_h[x][y])^2 + (G_h[x][y])^2]/256$
530
540
$e = \begin{cases} 0 & G_{mag} < T_1 \\ \frac{255}{T_1 - T_2}(G_{mag} - T_1) & T_1 \le G_{mag} \le T_2 \\ 255 & G_{mag} > T_2 \end{cases}$
550
e
255
$T_1$
$T_2$
$G_{mag}$
e[x][y]
(edge strength)

FIG. 5

FIG. 6A

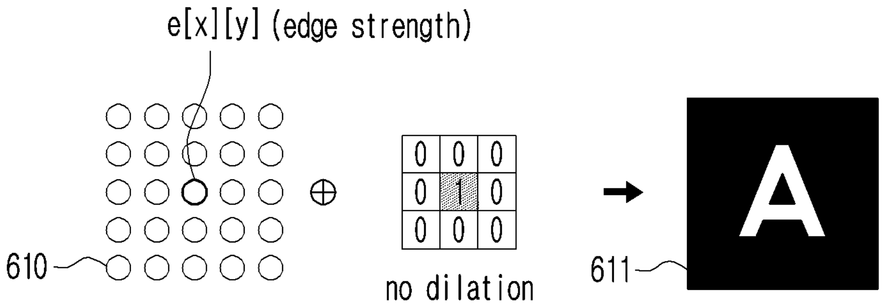

FIG. 6B

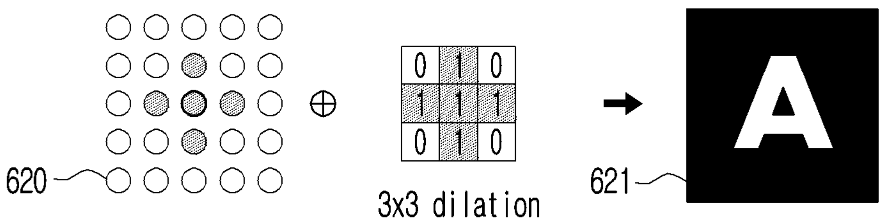

FIG. 6C

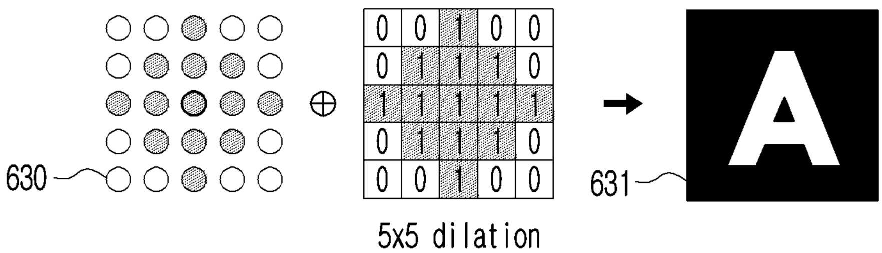

FIG. 7

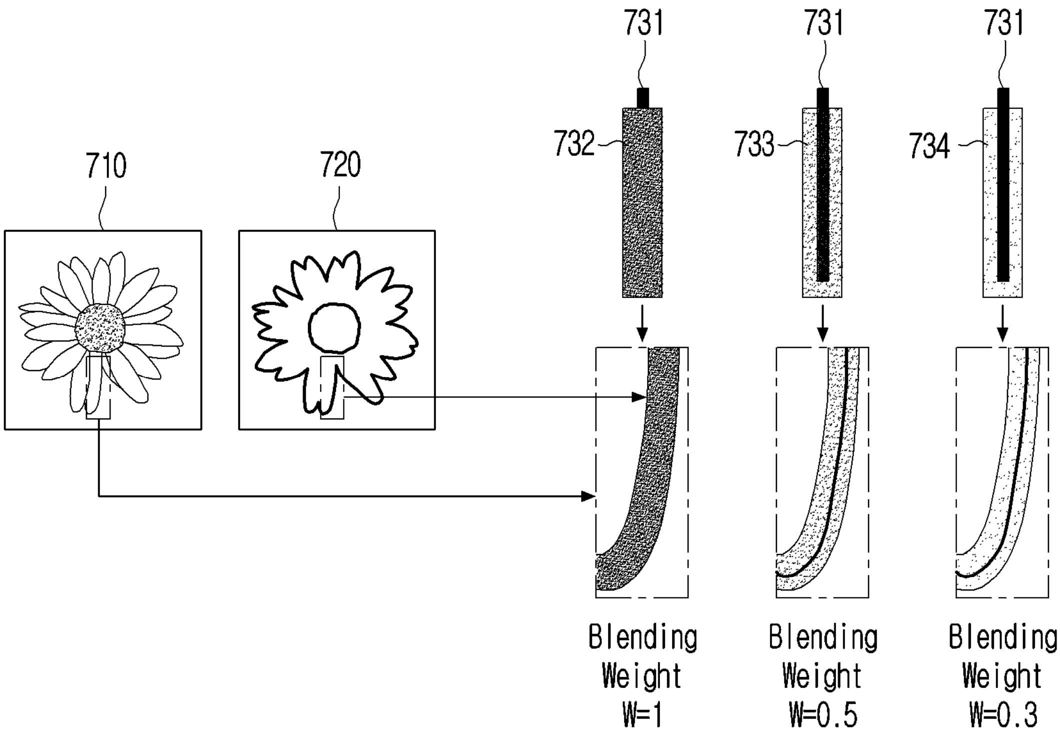
731
731
731
732
733
734
710
720
Blending
Weight
W=1
Blending
Weight
W=0.5
Blending
Weight
W=0.3

# FIG. 8

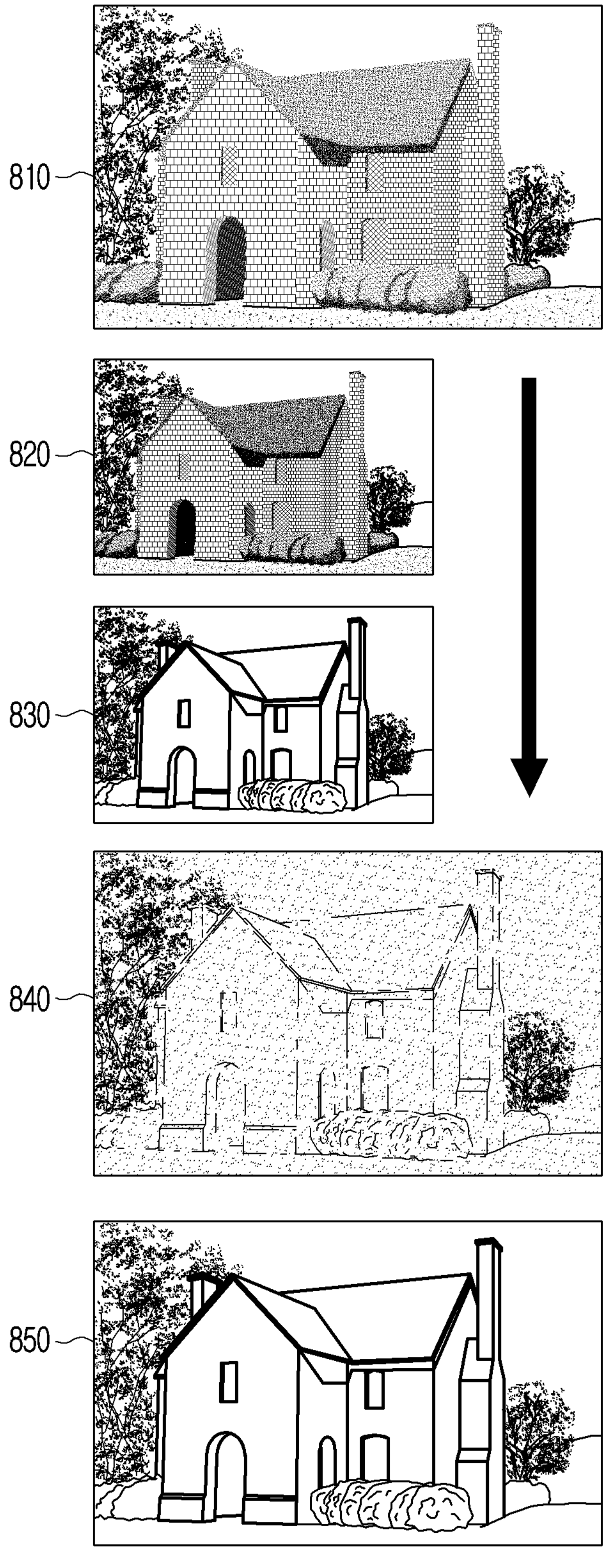

# FIG. 9A

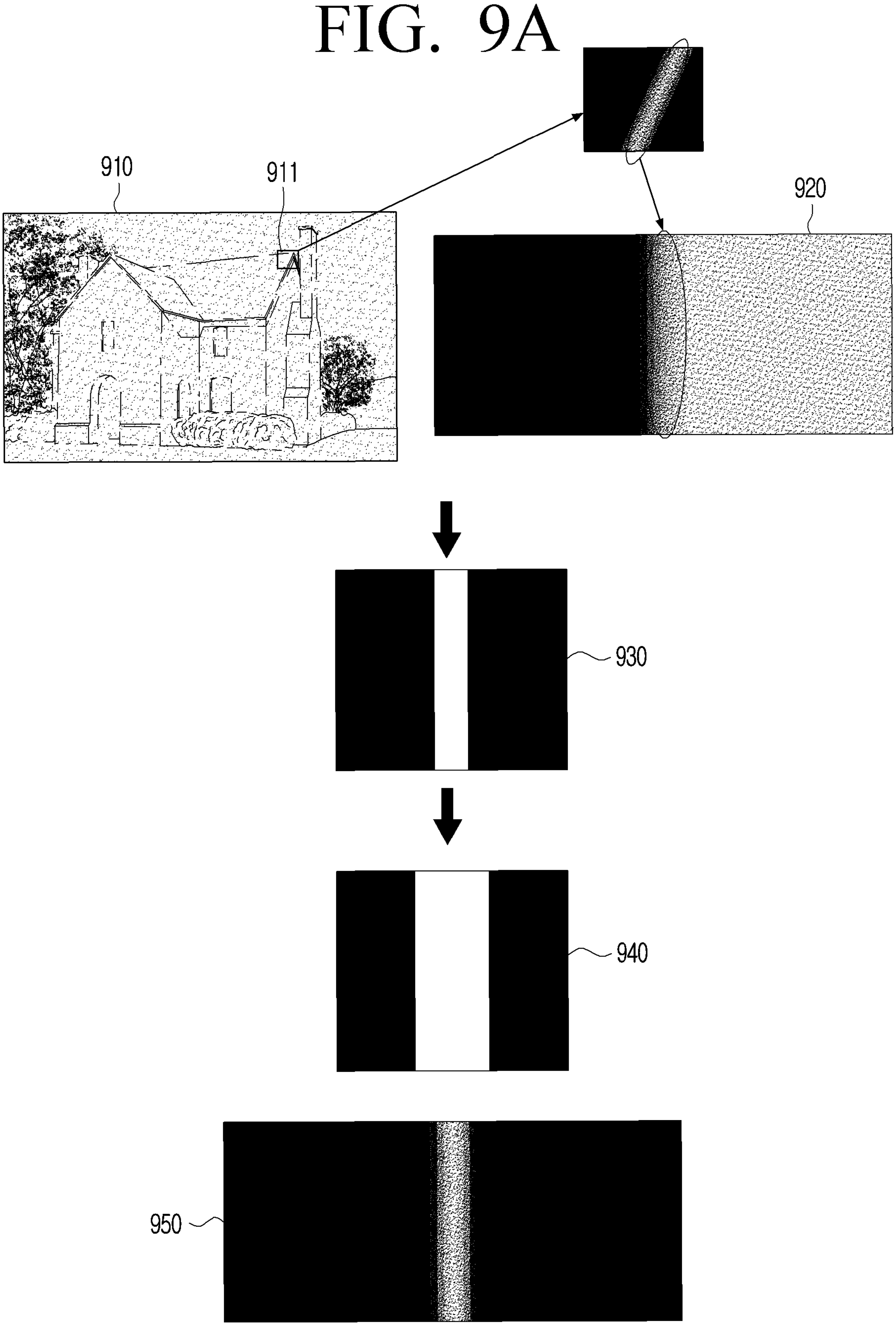


[LCR measure on input image]

FIG. 9B

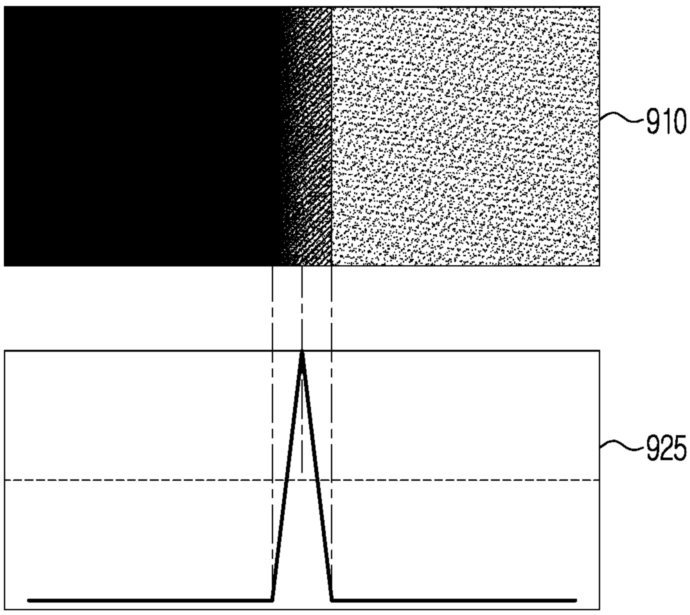

# FIG. 10A

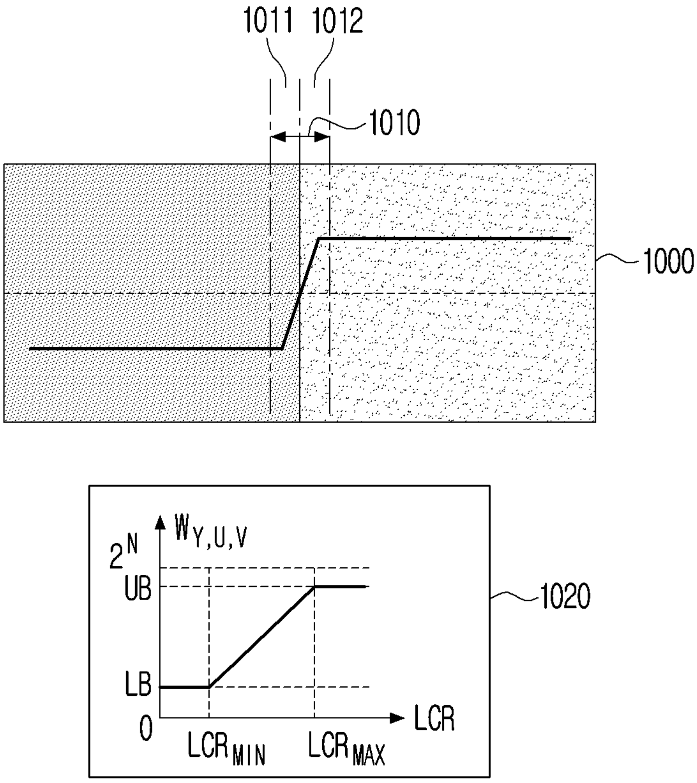

# FIG. 10B

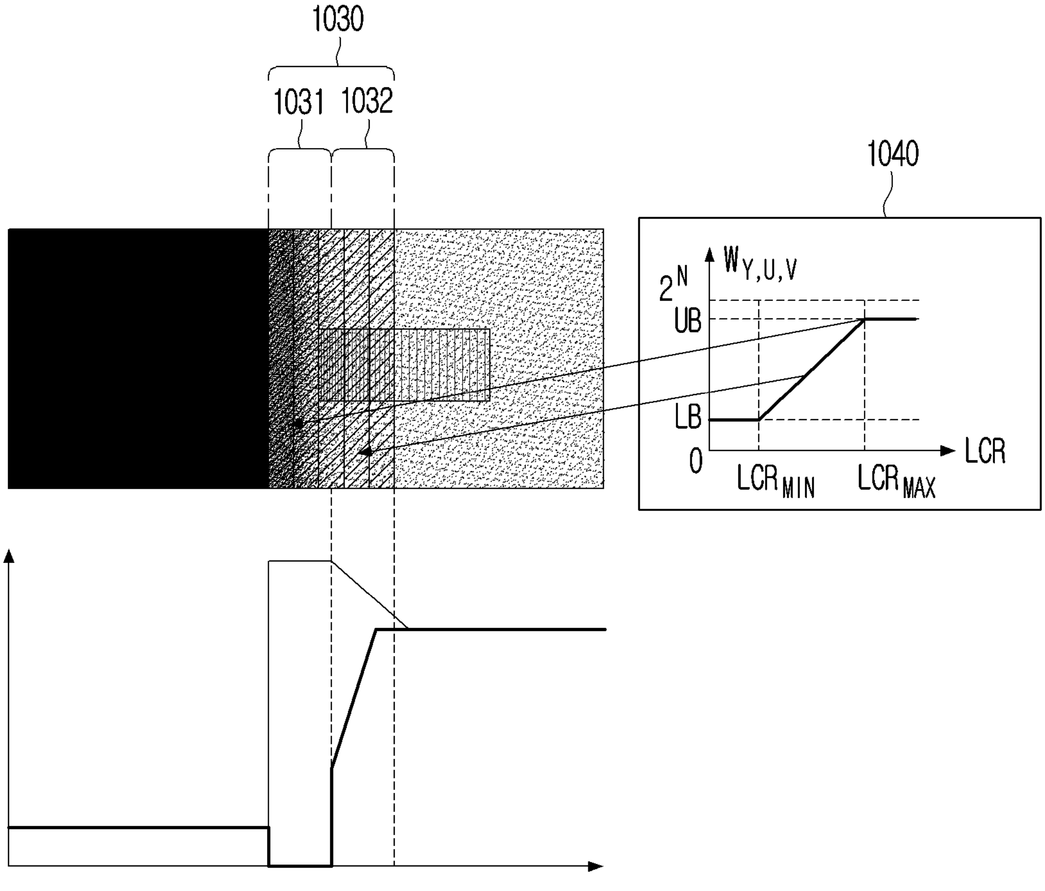

# FIG. 11

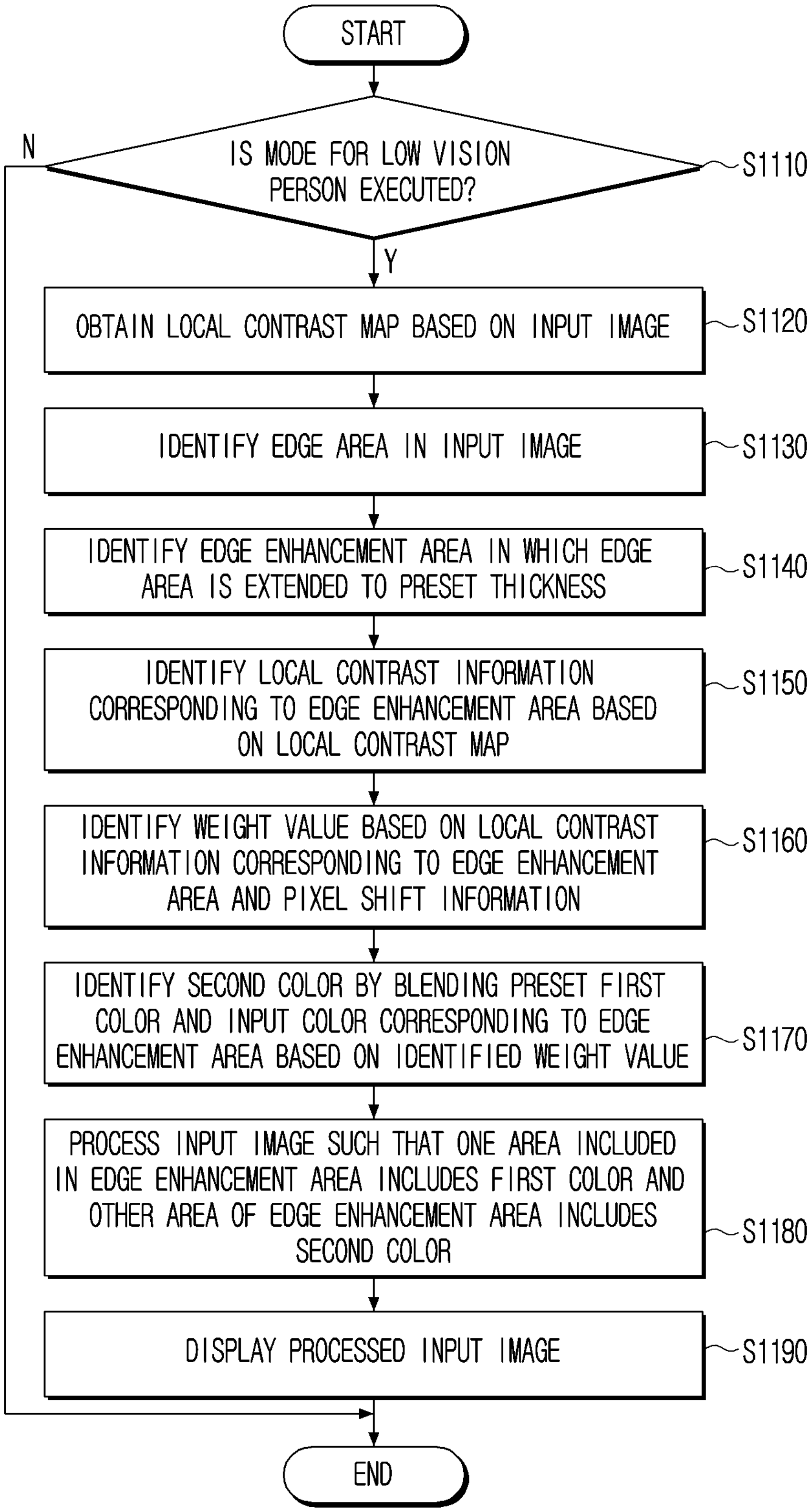
START
IS MODE FOR LOW VISION PERSON EXECUTED?
N
Y
S1110
OBTAIN LOCAL CONTRAST MAP BASED ON INPUT IMAGE
S1120
IDENTIFY EDGE AREA IN INPUT IMAGE
S1130
IDENTIFY EDGE ENHANCEMENT AREA IN WHICH EDGE AREA IS EXTENDED TO PRESET THICKNESS
S1140
IDENTIFY LOCAL CONTRAST INFORMATION CORRESPONDING TO EDGE ENHANCEMENT AREA BASED ON LOCAL CONTRAST MAP
S1150
IDENTIFY WEIGHT VALUE BASED ON LOCAL CONTRAST INFORMATION CORRESPONDING TO EDGE ENHANCEMENT AREA AND PIXEL SHIFT INFORMATION
S1160
IDENTIFY SECOND COLOR BY BLENDING PRESET FIRST COLOR AND INPUT COLOR CORRESPONDING TO EDGE ENHANCEMENT AREA BASED ON IDENTIFIED WEIGHT VALUE
S1170
PROCESS INPUT IMAGE SUCH THAT ONE AREA INCLUDED IN EDGE ENHANCEMENT AREA INCLUDES FIRST COLOR AND OTHER AREA OF EDGE ENHANCEMENT AREA INCLUDES SECOND COLOR
S1180
DISPLAY PROCESSED INPUT IMAGE
S1190
END

FIG. 12A

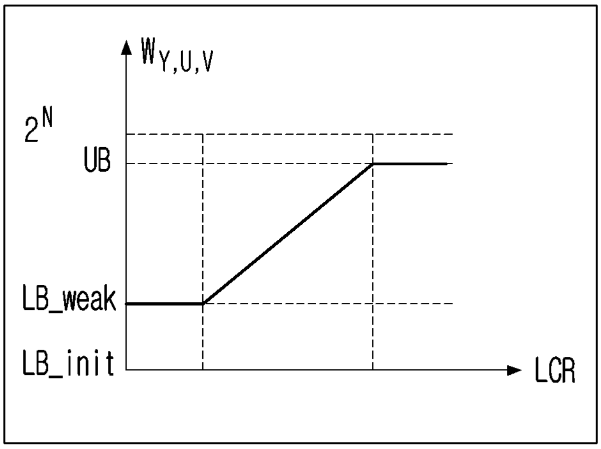


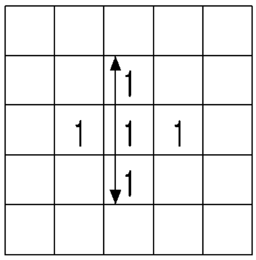


Dilation Filter

FIG. 12B

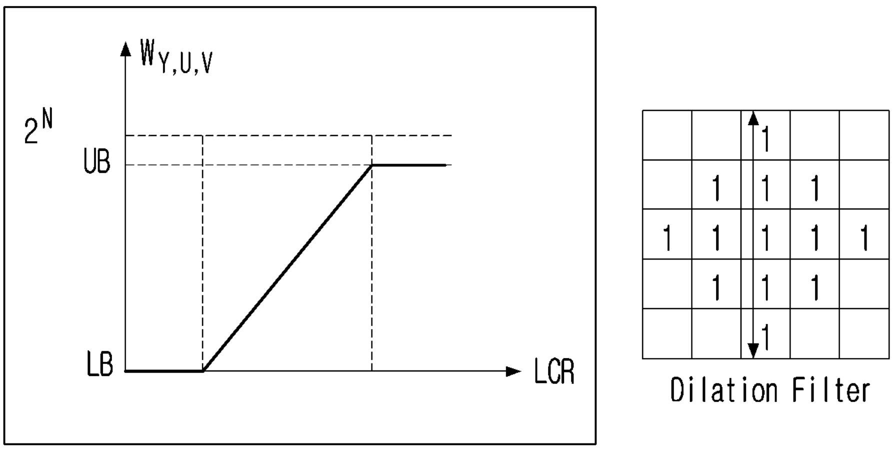

# FIG. 13

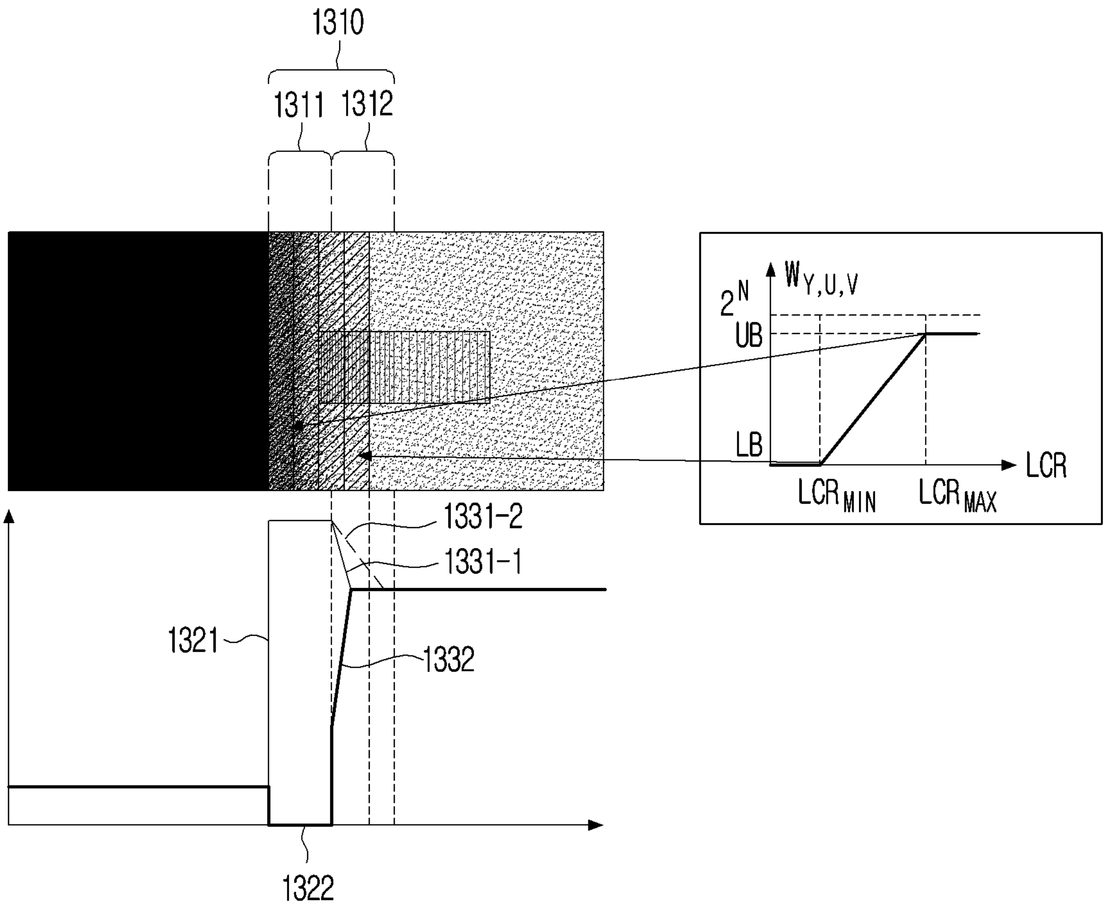
1310
1311
1312
1331-2
1331-1
1321
1332
1322
$W_{Y,U,V}$
$2^N$
UB
LB
LCR
$LCR_{MIN}$
$LCR_{MAX}$

FIG. 14

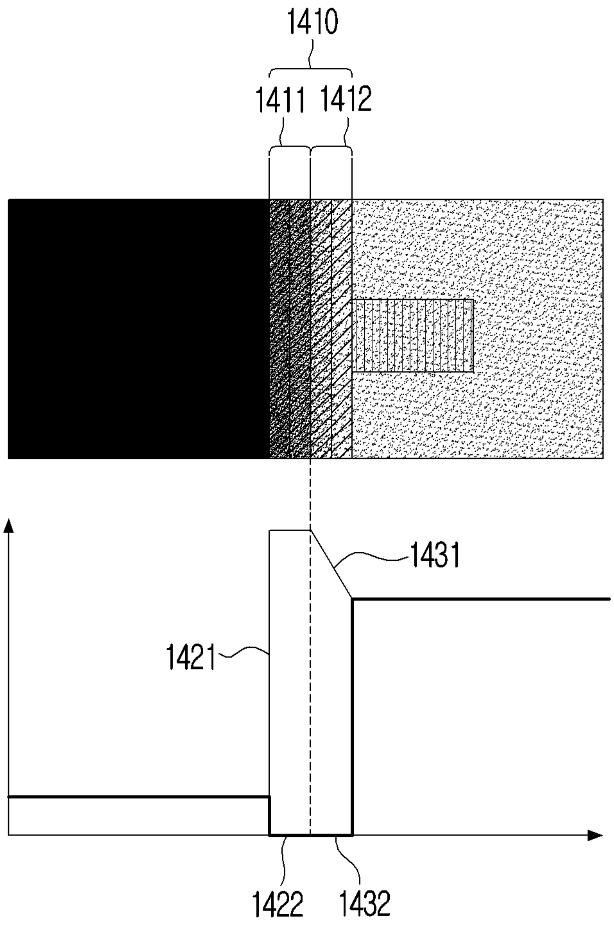

**INTERNATIONAL SEARCH REPORT**

International application No.
**PCT/KR2025/004450**

**A. CLASSIFICATION OF SUBJECT MATTER**

**G09G 5/02**(2006.01)i; **G09G 3/3208**(2016.01)i; **G06T 7/12**(2017.01)i; **G09G 3/00**(2006.01)i

According to International Patent Classification (IPC) or to both national classification and IPC

**B. FIELDS SEARCHED**

Minimum documentation searched (classification system followed by classification symbols)

G09G 5/02(2006.01); A61B 6/00(2006.01); G03B 13/30(2006.01); G06T 19/00(2011.01); G06T 5/00(2006.01); H04N 5/232(2006.01); H04N 7/00(2011.01); H04N 9/64(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 윤곽선 강조(edge emphasis), 로컬 콘트라스트(local contrast), 가중치(weight), 색상(color), 두께(thickness), 블렌딩(blending), 임계(threshold)

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2019-0016868 A (SAMSUNG ELECTRONICS CO., LTD.) 19 February 2019 (2019-02-19)<br>See paragraphs [0021], [0029], [0034], [0041], [0057], [0254]-[0255], [0257] and [0282]; and figures 1-2, 5 and 39-40. | 1-4,8-13,15<br>5-7,14 |
| Y | WO 2020-195246 A1 (SONY CORPORATION) 01 October 2020 (2020-10-01)<br>See paragraphs [0049], [0051], [0056], [0059], [0068] and [0131]; and figures 1-2 and 9-10. | 1-4,8-13,15 |
| Y | KR 10-2007-0080582 A (SONY CORPORATION) 10 August 2007 (2007-08-10)<br>See paragraphs [0025] and [0028]; and figure 1. | 2-4,8,11-13 |
| A | KR 10-2018-0052501 A (SAMSUNG ELECTRONICS CO., LTD.) 18 May 2018 (2018-05-18)<br>See paragraphs [0035]-[0058] and [0116]-[0120]; and figures 1-3 and 17. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 July 2025** | **15 July 2025** |


| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

**INTERNATIONAL SEARCH REPORT**

International application No.
**PCT/KR2025/004450**

**C. DOCUMENTS CONSIDERED TO BE RELEVANT**

| Category* | Citation of document, with indication, where appropriate, of the relevant passages | Relevant to claim No. |
|---|---|---|
| A | KR 10-2012-0028760 A (SAMSUNG ELECTRONICS CO., LTD.) 23 March 2012 (2012-03-23) See paragraphs [0013]-[0112]; and figures 1-2. | 1-15 |

Form PCT/ISA/210 (second sheet) (July 2022)

**INTERNATIONAL SEARCH REPORT**
**Information on patent family members**

International application No.
**PCT/KR2025/004450**

| Patent document cited in search report | | | Publication date (day/month/year) | Patent family member(s) | | | Publication date (day/month/year) |
|---|---|---|---|---|---|---|---|
| KR | 10-2019-0016868 | A | 19 February 2019 | EP | 3664445 | A1 | 10 June 2020 |
| | | | | EP | 3664445 | B1 | 05 May 2021 |
| | | | | US | 11128909 | B2 | 21 September 2021 |
| | | | | US | 2021-0092472 | A1 | 25 March 2021 |
| | | | | WO | 2019-031676 | A1 | 14 February 2019 |
| WO | 2020-195246 | A1 | 01 October 2020 | CN | 113574858 | A | 29 October 2021 |
| | | | | CN | 113574858 | B | 17 December 2024 |
| | | | | EP | 3934234 | A1 | 05 January 2022 |
| | | | | EP | 3934234 | A4 | 30 March 2022 |
| | | | | JP | 7444163 | B2 | 06 March 2024 |
| | | | | US | 11729493 | B2 | 15 August 2023 |
| | | | | US | 2022-0182555 | A1 | 09 June 2022 |
| KR | 10-2007-0080582 | A | 10 August 2007 | CN | 101079949 | A | 28 November 2007 |
| | | | | CN | 101079949 | B | 02 June 2010 |
| | | | | EP | 1816602 | A1 | 08 August 2007 |
| | | | | EP | 1816602 | B1 | 08 October 2008 |
| | | | | JP | 2007-213125 | A | 23 August 2007 |
| | | | | JP | 4710635 | B2 | 29 June 2011 |
| | | | | US | 2008-0199099 | A1 | 21 August 2008 |
| | | | | US | 7817872 | B2 | 19 October 2010 |
| KR | 10-2018-0052501 | A | 18 May 2018 | | None | | |
| KR | 10-2012-0028760 | A | 23 March 2012 | KR | 10-1689867 | B1 | 27 December 2016 |
| | | | | US | 2012-0063662 | A1 | 15 March 2012 |
| | | | | US | 8611633 | B2 | 17 December 2013 |

Form PCT/ISA/210 (patent family annex) (July 2022)